(19) **Europäisches Patentamt / European Patent Office / Office européen des brevets**

(11) **EP 4 750 129 A1**

(12) **EUROPEAN PATENT APPLICATION**
published in accordance with Art. 153(4) EPC

(43) Date of publication:
27.05.2026 Bulletin 2026/22

(21) Application number: 24853722.7

(22) Date of filing: 09.08.2024

(51) International Patent Classification (IPC):
*H04W 24/02* (2009.01)

(52) Cooperative Patent Classification (CPC):
H04W 24/02

(86) International application number:
PCT/CN2024/111268

(87) International publication number:
WO 2025/036313 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.08.2023 CN 202311019150

(71) Applicant: HUAWEI TECHNOLOGIES CO., LTD.
Shenzhen 518129 (CN)

(72) Inventors:
• XIAO, Xinlong
Shenzhen, Guangdong 518129 (CN)
• WEI, Jingxin
Shenzhen, Guangdong 518129 (CN)
• ZHANG, Li
Shenzhen, Guangdong 518129 (CN)

(74) Representative: Pfenning, Meinig & Partner mbB
Patent- und Rechtsanwälte
Theresienhöhe 11a
80339 München (DE)

(54) **MEASUREMENT METHOD, APPARATUS AND SYSTEM**

(57) Embodiments of this application relate to the field of communication technologies, and disclose a measurement method, an apparatus, and a system, to adaptively adjust a measurement period. The method includes: performing a first measurement based on a first measurement period when a mobility parameter of a terminal device meets a preset condition, where the first measurement period is shorter than a second measurement period, and the second measurement period is a measurement period for the terminal device to perform the first measurement when the mobility parameter does not meet the preset condition.

FIG. 5

**Description**

This application claims priority to Chinese Patent Application No. 202311019150.2, filed with the China National Intellectual Property Administration on August 11, 2023 and entitled "MEASUREMENT METHOD, APPARATUS, AND SYSTEM", which is incorporated herein by reference in its entirety.

**TECHNICAL FIELD**

Embodiments of this application relate to the field of communication technologies, and in particular, to a measurement method, an apparatus, and a system.

**BACKGROUND**

Currently, in a process of calculating a measurement period of a cell in a millimeter-wave band, a factor related to a quantity of beams is newly added, so that the measurement period of the cell in the millimeter-wave band is usually long. If a terminal device in the cell performs a measurement based on the measurement period, a problem that the measurement cannot be performed in time may occur. Consequently, a measurement result reported by the terminal device is lagged, and a problem such as mobility reselection or handover lag is caused, affecting mobility management performance.

**SUMMARY**

Embodiments of this application provide a measurement method, an apparatus, and a system, to adaptively adjust a measurement period.

To achieve the foregoing objective, embodiments of this application provide the following technical solutions.

According to a first aspect, a measurement method is provided. The method may be performed by a terminal device, or may be performed by a component of the terminal device, for example, a processor, a chip, or a chip system of the terminal device, or may be implemented by a logical module or software that can implement all or a part of the terminal device. An example in which the method is performed by the terminal device is used below for description. The measurement method includes: performing a first measurement based on a first measurement period when a mobility parameter of the terminal device meets a preset condition, where the first measurement period is shorter than a second measurement period, and the second measurement period is a measurement period for the terminal device to perform the first measurement when the mobility parameter does not meet the preset condition.

In this embodiment of this application, the terminal device may determine whether the mobility parameter of the terminal device meets the preset condition, and when the mobility parameter of the terminal device meets the preset condition, perform the first measurement based on the first measurement period shorter than the second measurement period, where the second measurement period is the measurement period for the terminal device to perform the first measurement when the mobility parameter does not meet the preset condition. Because the terminal device may perform the first measurement in time when the mobility parameter of the terminal device meets the preset condition, a problem that a measurement result reported by the terminal device is lagged can be avoided as much as possible. In other words, according to the measurement method provided in this embodiment of this application, the terminal device may adaptively select an appropriate measurement period for the first measurement based on the mobility parameter of the terminal device, to adaptively adjust the measurement period.

With reference to the first aspect, in a possible implementation, the preset condition includes that signal quality of the terminal device is less than or equal to a first preset threshold, and/or a change rate of the signal quality of the terminal device is greater than or equal to a second preset threshold, and/or a movement speed of the terminal device is greater than or equal to a third preset threshold.

In other words, the preset condition may be set based on three dimensions: the signal quality of the terminal device, the change rate of the signal quality of the terminal device, or the movement speed of the terminal device. If the signal quality of the terminal device is less than or equal to the first preset threshold, and/or the change rate of the signal quality of the terminal device is greater than or equal to the second preset threshold, and/or the movement speed of the terminal device is greater than or equal to the third preset threshold, it indicates that the signal quality of the terminal device is poor or the signal quality of the terminal device easily fluctuates. In this case, the terminal device needs to perform the first measurement in time, so that a signal measurement result of the terminal device can be learned of in time.

With reference to the first aspect, in a possible implementation, the performing the first measurement based on the first measurement period when the mobility parameter of the terminal device meets the preset condition includes: receiving first indication information from a network device, where the first indication information indicates the terminal device to perform the first measurement based on the first measurement period, and the first indication information is triggered when the mobility parameter meets the preset condition; and performing the first measurement based on the first measurement period and the first indication information.

In other words, when the mobility parameter of the terminal device meets the preset condition, the terminal device may receive the first indication information from the network device, where the first indication information indicates the terminal device to perform the first measurement based on the first measurement period. Further, the terminal device may perform the first measurement based on the first measurement period and the first indication information. When the mobility parameter of the terminal device meets the preset condition, the network device may indicate the terminal device to perform the first measurement in time. Therefore, a problem that a measurement result reported by the terminal device is lagged can be avoided as much as possible. In other words, in this case, the network device may adaptively select an appropriate measurement period for the first measurement based on the mobility parameter of the terminal device, to adaptively adjust the measurement period.

With reference to the first aspect, in a possible implementation, the method provided in this embodiment of this application further includes: when the mobility parameter does not meet the preset condition, performing the first measurement based on the second measurement period. In this way, the terminal device may perform the first measurement on the entire second measurement period, to avoid a problem that the first measurement cannot be normally performed due to scheduling restriction or measurement GAP interruption, thereby ensuring that the first measurement is normally performed.

Alternatively, with reference to the first aspect, in a possible implementation, the method provided in this embodiment of this application further includes: when the mobility parameter does not meet the preset condition, performing the first measurement based on one or more measurement time configuration SMTC measurement occasions in the second measurement period, and performing data transmission based on an SMTC measurement occasion in the second measurement period other than the one or more SMTC measurement occasions. The terminal device may split the second measurement period when the mobility parameter of the terminal device does not meet the preset condition, so that one part of SMTC measurement occasions in the second measurement period are used for the first measurement, and the other part of SMTC measurement occasions in the second measurement period are used for the data transmission. Therefore, a quantity of time domain resources used for the data transmission can be increased, to improve a throughput of the terminal device.

Alternatively, with reference to the first aspect, in a possible implementation, the method provided in this embodiment of this application further includes: when the mobility parameter does not meet the preset condition, performing the first measurement based on one or more SMTC measurement occasions in the second measurement period, and performing a second measurement based on an SMTC measurement occasion in the second measurement period other than the one or more SMTC measurement occasions. The terminal device may split the second measurement period when the mobility parameter of the terminal device does not meet the preset condition, so that one part of SMTC measurement occasions in the second measurement period are used for the first measurement, and the other part of SMTC measurement occasions in the second measurement period are used for the second measurement. Therefore, a quantity of time domain resources used for the second measurement can be increased, to improve a measurement capability of the second measurement.

With reference to the first aspect, in a possible implementation, the method provided in this embodiment of this application further includes: determining, according to a first SMTC rule, the one or more SMTC measurement occasions for performing the first measurement in the second measurement period and one or more SMTC measurement occasions for performing the second measurement or the data transmission in the second measurement period, where the first SMTC rule indicates the one or more SMTC measurement occasions for performing the first measurement in the second measurement period.

In other words, the terminal device may autonomously determine, according to the first SMTC rule, the one or more SMTC measurement occasions for performing the first measurement in the second measurement period and the one or more SMTC measurement occasions for performing the second measurement or the data transmission in the second measurement period, and does not need to determine, by exchanging signaling with the network device, the one or more SMTC measurement occasions for performing the first measurement in the second measurement period and the one or more SMTC measurement occasions for performing the second measurement or the data transmission in the second measurement period, to reduce signaling overheads between the terminal device and the network device.

With reference to the first aspect, in a possible implementation, the method provided in this embodiment of this application further includes: sending a quantity of SMTCs for a measurement to the network device, where the quantity of SMTCs for the measurement is a quantity of SMTC measurement occasions that are expected to be occupied, in multiple SMTC measurement occasions included in the second measurement period, when the terminal device performs the first measurement; receiving second indication information from the network device, where the second indication information indicates a first SMTC rule, and the first SMTC rule indicates the one or more SMTC measurement occasions for performing the first measurement in the second measurement period; and determining, according to the first SMTC rule, the one or more SMTC measurement occasions for performing the first measurement in the second measurement period and one or more SMTC measurement occasions for performing the second measurement or the data transmission in the second measurement period.

In other words, the terminal device may learn of the first SMTC rule by exchanging signaling with the network device. Compared with a predetermined first SMTC rule, the first SMTC rule indicated by the network device can be more suitable for an actual network status of the terminal device. In this way, the terminal device determines, according to the first SMTC rule indicated by the network device, the one or more SMTC measurement occasions for performing the first measurement in the second measurement period and the one or more SMTC measurement occasions for performing the second measurement or the data transmission in the second measurement period, to improve accuracy of allocating SMTC measurement occasions in the second measurement period by the terminal device.

With reference to the first aspect, in a possible implementation, the method provided in this embodiment of this application further includes: receiving third indication information from the network device, where the third indication information indicates the terminal device to perform the first measurement based on the one or more SMTC measurement occasions in the second measurement period, and perform the data transmission based on the SMTC measurement occasion in the second measurement period other than the one or more SMTC measurement occasions.

In other words, the terminal device receives the third indication information from the network device, to learn that the terminal device may not only perform the first measurement based on the one or more SMTC measurement occasions in the second measurement period, but also perform the data transmission based on the SMTC measurement occasion in the second measurement period other than the one or more SMTC measurement occasions.

With reference to the first aspect, in a possible implementation, the method provided in this embodiment of this application further includes: receiving fourth indication information from the network device, where the fourth indication information indicates the terminal device to perform the first measurement based on the one or more SMTC measurement occasions in the second measurement period, and perform the second measurement based on the SMTC measurement occasion in the second measurement period other than the one or more SMTC measurement occasions.

In other words, the terminal device receives the fourth indication information from the network device, to learn that the terminal device may not only perform the first measurement based on the one or more SMTC measurement occasions in the second measurement period, but also perform the second measurement based on the SMTC measurement occasion in the second measurement period other than the one or more SMTC measurement occasions.

With reference to the first aspect, in a possible implementation, the method provided in this embodiment of this application further includes: receiving fifth indication information from the network device, where the fifth indication information indicates the terminal device to perform the first measurement based on the second measurement period.

In other words, the terminal device receives the fifth indication information from the network device, to learn that the terminal device may perform the first measurement based on the entire second measurement period.

With reference to the first aspect, in a possible implementation, when the SMTC measurement occasion in the second measurement period other than the one or more SMTC measurement occasions is used for the second measurement, a first measurement period compensation factor of the second measurement is determined based on a quantity of synchronization signal block SSB measurement occasions preempted by the first measurement in the second measurement period.

In other words, if the SMTC measurement occasion in the second measurement period other than the one or more SMTC measurement occasions is not used for the second measurement, the terminal device needs to compensate for the SSB measurement occasion preempted by the first measurement in the second measurement period. If the SMTC measurement occasion in the second measurement period other than the one or more SMTC measurement occasions is used for the second measurement, a part of SSB measurement occasions originally preempted by the first measurement may be released, so that the quantity of SSB measurement occasions preempted by the first measurement in the second measurement period is reduced, to reduce a measurement period compensation factor of the second measurement, shorten a measurement period of the second measurement, and further learn of a beam change in time through the second measurement.

With reference to the first aspect, in a possible implementation, the method provided in this embodiment of this application further includes: when the mobility parameter does not meet the preset condition, performing the first measurement based on the second measurement period. In this way, the terminal device may perform the first measurement on the entire second measurement period, to avoid a problem that the first measurement cannot be normally performed due to measurement GAP interruption, thereby ensuring that the first measurement is normally performed.

Alternatively, with reference to the first aspect, in a possible implementation, the method provided in this embodiment of this application further includes: when the mobility parameter does not meet the preset condition, performing the first measurement based on one or more measurement gap GAP measurement occasions in the second measurement period, and performing data transmission based on a measurement GAP measurement occasion in the second measurement period other than the one or more measurement GAP measurement occasions. The terminal device may split the second measurement period when the mobility parameter of the terminal device does not meet the preset condition, so that one part of measurement GAP measurement occasions in the second measurement period are used for the first measurement, and the other part of measurement GAP measurement occasions in the second measurement period are used for the data transmission. Therefore, a quantity of time domain resources used for the data transmission can be increased, to improve a throughput of the terminal device.

Alternatively, with reference to the first aspect, in a possible implementation, the method provided in this embodiment of this application further includes: when the mobility parameter does not meet the preset condition, performing the first measurement based on one or more measurement GAP measurement occasions in the second measurement period, and performing a second measurement based on a measurement GAP measurement occasion in the second measurement period other than the one or more measurement GAP measurement occasions. The terminal device may split the second measurement period when the mobility parameter of the terminal device does not meet the preset condition, so that one part of measurement GAP measurement occasions in the second measurement period are used for the first measurement, and the other part of measurement GAP measurement occasions in the second measurement period are used for the second measurement. Therefore, a quantity of time domain resources used for the second measurement can be increased, to improve a measurement capability of the second measurement.

With reference to the first aspect, in a possible implementation, the method provided in this embodiment of this application further includes: determining, according to a first measurement GAP rule, the one or more measurement GAP measurement occasions for performing the first measurement in the second measurement period and one or more measurement GAP measurement occasions for performing the second measurement or the data transmission in the second measurement period, where the first measurement GAP rule indicates the one or more measurement GAP measurement occasions for performing the first measurement in the second measurement period.

In other words, the terminal device may autonomously determine, according to the first measurement GAP rule, the one or more measurement GAP measurement occasions for performing the first measurement in the second measurement period and the one or more measurement GAP measurement occasions for performing the second measurement or the data transmission in the second measurement period, and does not need to determine, by exchanging signaling with the network device, the one or more measurement GAP measurement occasions for performing the first measurement in the second measurement period and the one or more measurement GAP measurement occasions for performing the second measurement or the data transmission in the second measurement period, to reduce signaling overheads between the terminal device and the network device.

With reference to the first aspect, in a possible implementation, the method provided in this embodiment of this application further includes: sending a quantity of measurement GAPs for a measurement to the network device, where the quantity of measurement GAPs for the measurement is a quantity of measurement GAP measurement occasions that are expected to be occupied, in multiple measurement GAP measurement occasions included in the second measurement period, when the terminal device performs the first measurement; receiving sixth indication information from the network device, where the sixth indication information indicates a first measurement GAP rule, and the first measurement GAP rule indicates the one or more measurement GAP measurement occasions for performing the first measurement in the second measurement period; and determining, according to the first measurement GAP rule, the one or more measurement GAP measurement occasions for performing the first measurement in the second measurement period and one or more measurement GAP measurement occasions for performing the second measurement or the data transmission in the second measurement period.

In other words, the terminal device may learn of the first measurement GAP rule by exchanging signaling with the network device. Compared with a predetermined first measurement GAP rule, the first measurement GAP rule indicated by the network device can be more suitable for an actual network status of the terminal device. In this way, the terminal device determines, according to the first measurement GAP rule indicated by the network device, the one or more measurement GAP measurement occasions for performing the first measurement in the second measurement period and the one or more measurement GAP measurement occasions for performing the second measurement or the data transmission in the second measurement period, to improve accuracy of allocating measurement GAP measurement occasions in the second measurement period by the terminal device.

With reference to the first aspect, in a possible implementation, the method provided in this embodiment of this application further includes: receiving seventh indication information from the network device, where the seventh indication information indicates the terminal device to perform the first measurement based on the one or more measurement GAP measurement occasions in the second measurement period, and perform the data transmission based on the measurement GAP measurement occasion in the second measurement period other than the one or more measurement GAP measurement occasions.

In other words, the terminal device receives the seventh indication information from the network device, to learn that the terminal device may not only perform the first measurement based on the one or more measurement GAP measurement occasions in the second measurement period, but also perform the data transmission based on the measurement GAP measurement occasion in the second measurement period other than the one or more measurement GAP measurement occasions.

With reference to the first aspect, in a possible implementation, the method provided in this embodiment of

application further includes: receiving eighth indication information from the network device, where the eighth indication information indicates the terminal device to perform the first measurement based on the one or more measurement GAP measurement occasions in the second measurement period, and perform the second measurement based on the measurement GAP measurement occasion in the second measurement period other than the one or more measurement GAP measurement occasions.

In other words, the terminal device receives the eighth indication information from the network device, to learn that the terminal device may not only perform the first measurement based on the one or more measurement GAP measurement occasions in the second measurement period, but also perform the second measurement based on the measurement GAP measurement occasion in the second measurement period other than the one or more measurement GAP measurement occasions.

With reference to the first aspect, in a possible implementation, the method provided in this embodiment of this application further includes: receiving ninth indication information from the network device, where the ninth indication information indicates the terminal device to perform the first measurement based on the second measurement period.

In other words, the terminal device receives the ninth indication information from the network device, to learn that the terminal device may perform the first measurement based on the entire second measurement period.

With reference to the first aspect, in a possible implementation, when the measurement GAP measurement occasion in the second measurement period other than the one or more measurement GAP measurement occasions is used for the second measurement, a measurement period compensation factor of the second measurement is determined based on a quantity of synchronization signal block SSB measurement occasions and a quantity of available measurement occasions in the second measurement period, where the quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period, and the valid measurement GAP measurement occasion is one or more measurement GAP measurement occasions for the first measurement in the second measurement period.

In a current related protocol, it is specified that the quantity of available measurement occasions is a quantity of SSB measurement occasions that overlap neither any measurement GAP measurement occasion nor any SMTC measurement occasion in the second measurement period. However, the quantity of available measurement occasions recorded in this embodiment of this application is the quantity of SSB measurement occasions that overlap neither the valid measurement GAP measurement occasion nor the any SMTC measurement occasion in the second measurement period, or the quantity of available measurement occasions is the quantity of SSB measurement occasions that do not overlap the valid measurement GAP measurement occasion in the second measurement period. A quantity of valid measurement GAP measurement occasions in the second measurement period is less than a quantity of all measurement GAP measurement occasions in the second measurement period. Therefore, in the second measurement period, the quantity of SSB measurement occasions that do not overlap the quantity of valid measurement GAP measurement occasions is greater than a quantity of SSB measurement occasions that do not overlap a quantity of any measurement GAP measurement occasions. In other words, the quantity of available measurement occasions recorded in this embodiment of this application is greater than the quantity of available measurement occasions specified in the related protocol.

Generally, the measurement period compensation factor of the second measurement is a ratio of a quantity of SSB measurement occasions in the second measurement period to the quantity of available measurement occasions. It can be learned from this that a larger quantity of available measurement occasions indicates a smaller measurement period compensation factor of the second measurement. In other words, the measurement method recorded in this embodiment of this application can reduce the measurement period compensation factor of the second measurement.

Further, the measurement period compensation factor of the second measurement may be used to determine a period of the second measurement. Generally, the terminal device determines the period of the second measurement by performing a multiplication operation on the measurement period compensation factor of the second measurement. It can be learned from this that a smaller measurement period compensation factor of the second measurement indicates a shorter period of the second measurement. In other words, the measurement method recorded in this embodiment of this application can shorten the period of the second measurement, to improve measurement performance of the second measurement and further improve beam sweeping performance.

With reference to the first aspect, in a possible implementation, the first measurement is an L3 measurement, and the second measurement is an L1 measurement.

With reference to the first aspect, in a possible implementation, when a target quantity of sweeping beams corresponding to the terminal device is less than a current quantity of sweeping beams of the terminal device, the first measurement period is determined based on the target quantity of sweeping beams corresponding to the terminal device; when a target quantity of parallel antenna panels corresponding to the terminal device is greater than a current quantity of parallel antenna panels of the terminal device, the first measurement period is determined based on the target quantity of parallel antenna panels corresponding to the terminal device; or when a target carrier measurement performance scaling factor CSSF corresponding to the terminal device is less than a current CSSF of the terminal device, the first measurement period is determined based on the target CSSF corresponding to the terminal device.

In other words, the first measurement period may be determined based on the target quantity of sweeping beams, the target quantity of parallel antenna panels, or the target CSSF, and multiple implementations of determining the first measurement period are provided.

According to a second aspect, a measurement method is provided. The method may be performed by a network device, or may be performed by a component of the network device, for example, a processor, a chip, or a chip system of the network device, or may be implemented by a logical module or software that can implement all or a part of the terminal device. An example in which the method is performed by the network device is used below for description. The measurement method includes: when a mobility parameter of a terminal device meets a preset condition, sending first indication information to the terminal device, where the first indication information indicates the terminal device to perform a first measurement based on a first measurement period, the first measurement period is shorter than a second measurement period, and the second measurement period is a measurement period for the terminal device to perform the first measurement when the mobility parameter does not meet the preset condition.

With reference to the second aspect, in a possible implementation, the preset condition includes that signal quality of the terminal device is less than or equal to a first preset threshold, and/or a change rate of the signal quality of the terminal device is greater than or equal to a second preset threshold, and/or a movement speed of the terminal device is greater than or equal to a third preset threshold.

With reference to the second aspect, in a possible implementation, the method provided in this embodiment of this application further includes: when the mobility parameter does not meet the preset condition, sending fifth indication information to the terminal device, where the fifth indication information indicates the terminal device to perform the first measurement based on the second measurement period; when the mobility parameter does not meet the preset condition, sending third indication information to the terminal device, where the third indication information indicates the terminal device to perform the first measurement based on one or more measurement time configuration SMTC measurement occasions in the second measurement period, and perform data transmission based on an SMTC measurement occasion in the second measurement period other than the one or more SMTC measurement occasions; or when the mobility parameter does not meet the preset condition, sending fourth indication information to the terminal device, where the fourth indication information indicates the terminal device to perform the first measurement based on one or more SMTC measurement occasions in the second measurement period, and perform a second measurement based on an SMTC measurement occasion in the second measurement period other than the one or more SMTC measurement occasions.

With reference to the second aspect, in a possible implementation, the method provided in this embodiment of this application further includes: receiving a quantity of SMTCs for a measurement from the terminal device, where the quantity of SMTCs for the measurement is a quantity of SMTC measurement occasions that are expected to be occupied, in multiple SMTC measurement occasions included in the second measurement period, when the terminal device performs the first measurement; and sending second indication information to the terminal device, where the second indication information indicates a first SMTC rule, and the first SMTC rule indicates the one or more SMTC measurement occasions for performing the first measurement in the second measurement period.

With reference to the second aspect, in a possible implementation, when the SMTC measurement occasion in the second measurement period other than the one or more SMTC measurement occasions is used for the second measurement, a measurement period compensation factor of the second measurement is determined based on a quantity of synchronization signal block SSB measurement occasions preempted by the first measurement in the second measurement period.

With reference to the second aspect, in a possible implementation, the method provided in this embodiment of this application further includes: when the mobility parameter does not meet the preset condition, sending ninth indication information to the terminal device, where the ninth indication information indicates the terminal device to perform the first measurement based on the second measurement period; when the mobility parameter does not meet the preset condition, sending seventh indication information to the terminal device, where the seventh indication information indicates the terminal device to perform the first measurement based on one or more measurement gap GAP measurement occasions in the second measurement period, and perform data transmission based on a measurement GAP measurement occasion in the second measurement period other than the one or more measurement GAP measurement occasions; or when the mobility parameter does not meet the preset condition, sending eighth indication information to the terminal device, where the eighth indication information indicates the terminal device to perform the first measurement based on one or more measurement GAP measurement occasions in the second measurement period, and perform a second measurement based on a measurement GAP measurement occasion in the second measurement period other than the one or more measurement GAP measurement occasions.

With reference to the second aspect, in a possible implementation, the method provided in this embodiment of this application further includes: receiving a quantity of measurement GAPs for a measurement from the terminal device, where the quantity of measurement GAPs for the measurement is a quantity of measurement GAP measurement occasions that are expected to be occupied, in multiple measurement GAP measurement occasions included in the second measurement period, when the terminal device performs the first measurement; and sending sixth indication information to the terminal device, where the sixth indication information indicates a first measurement GAP rule, and the first measurement GAP rule indicates the one or more measurement GAP measurement occasions for performing the first measurement in the second measurement period.

With reference to the second aspect, in a possible implementation, when the measurement GAP measurement occasion in the second measurement period other than the one or more measurement GAP measurement occasions is used for the second measurement, a measurement period compensation factor of the second measurement is determined based on a quantity of synchronization signal block SSB measurement occasions and a quantity of available measurement occasions in the second measurement period, where the quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period, and the valid measurement GAP measurement occasion is one or more measurement GAP measurement occasions for the first measurement in the second measurement period.

With reference to the second aspect, in a possible implementation, the first measurement is an L3 measurement, and the second measurement is an L1 measurement.

With reference to the second aspect, in a possible implementation, when a target quantity of sweeping beams corresponding to the terminal device is less than a current quantity of sweeping beams of the terminal device, the first measurement period is determined based on the target quantity of sweeping beams corresponding to the terminal device; when a target quantity of parallel antenna panels corresponding to the terminal device is greater than a current quantity of parallel antenna panels of the terminal device, the first measurement period is determined based on the target quantity of parallel antenna panels corresponding to the terminal device; or when a target carrier measurement performance scaling factor CSSF corresponding to the terminal device is less than a current CSSF of the terminal device, the first measurement period is determined based on the target CSSF corresponding to the terminal device.

For technical effects brought by any implementation of the second aspect, refer to the technical effects brought by a corresponding implementation of the first aspect. Details are not described herein again.

According to a third aspect, a communication apparatus is provided, to implement the foregoing methods. The communication apparatus may be the terminal device in any one of the first aspect or the implementations of the first aspect, or an apparatus including the terminal device, or an apparatus included in the terminal device, such as a chip. Alternatively, the communication apparatus may be the network device in any one of the second aspect or the implementations of the second aspect, or an apparatus including the network device, or an apparatus included in the network device, such as a chip. The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing function.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a fourth aspect, a communication apparatus is provided, and includes a processor and a memory. The memory is configured to store computer instructions. When the processor executes the instructions, the communication apparatus is enabled to perform the method in any one of the foregoing aspects. The communication apparatus may be the terminal device in any one of the first aspect or the implementations of the first aspect, or an apparatus including the terminal device, or an apparatus included in the terminal device, such as a chip. Alternatively, the communication apparatus may be the network device in any one of the second aspect or the implementations of the second aspect, or an apparatus including the network device, or an apparatus included in the network device, such as a chip.

According to a fifth aspect, a communication apparatus is provided, and includes a processor and a communication interface. The communication interface is configured to communicate with a module outside the communication apparatus. The processor is configured to execute a computer program or instructions, to enable the communication apparatus to perform the method in any one of the foregoing aspects. The communication apparatus may be the terminal device in any one of the first aspect or the implementations of the first aspect, or an apparatus including the terminal device, or an apparatus included in the terminal device, such as a chip. Alternatively, the communication apparatus may be the network device in any one of the second aspect or the implementations of the second aspect, or an apparatus including the network device, or an apparatus included in the network device, such as a chip.

According to a sixth aspect, a communication apparatus is provided, and includes at least one processor. The processor is configured to execute a computer program or instructions stored in a memory, to enable the communication apparatus to perform the method in any one of the foregoing aspects. The memory may be coupled to the processor, or may be independent of the processor. The communication apparatus may be the terminal device in any one of the first aspect or the implementations of the first aspect, or an apparatus including the terminal device, or an apparatus included in the terminal device, such as a chip. Alternatively, the communication apparatus may be the network device in any one of the second aspect or the implementations of the second aspect, or an apparatus including the network device, or an apparatus included in the network device, such as a chip.

According to a seventh aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any one of the implementations of the foregoing aspects.

According to an eighth aspect, a computer program product including instructions is provided. When the computer program product runs on a communication apparatus, the communication apparatus is enabled to perform the method in any one of the foregoing aspects or any one of the implementations of the foregoing aspects.

According to a ninth aspect, a communication apparatus is provided (for example, the communication apparatus may be a chip or a chip system). The communication apparatus includes a processor, configured to implement the function in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus in any one of the third aspect to the sixth aspect is a chip, the foregoing sending action/function may be understood as output, and the foregoing receiving action/function may be understood as input.

According to a tenth aspect, a measurement method is provided. The measurement method includes the method in any one of the first aspect or the implementations of the first aspect and the method in any one of the second aspect or the implementations of the second aspect.

According to an eleventh aspect, a communication system is provided. The communication system includes the network device in the foregoing aspects and the terminal device in the foregoing aspects.

For technical effects brought by any implementation of the third aspect to the eleventh aspect, refer to the technical effects brought by a corresponding implementation of the first aspect. Details are not described herein again.

It should be noted that various possible implementations of any one of the foregoing aspects may be combined provided that the solutions are not contradictory.

**BRIEF DESCRIPTION OF DRAWINGS**

FIG. 1 is a diagram of a structure of a communication system according to an embodiment of this application;
FIG. 2 is a diagram of a structure of a communication apparatus according to an embodiment of this application;
FIG. 3 is a diagram 1 of a structure of a terminal device according to an embodiment of this application;
FIG. 4 is a diagram of a structure of a base station according to an embodiment of this application;
FIG. 5 is a schematic flowchart of a measurement method according to an embodiment of this application;
FIG. 6 is a schematic flowchart of another measurement method according to an embodiment of this application;
FIG. 7 is an example diagram of resource occupation of each measurement according to an embodiment of this application;
FIG. 8 is a schematic flowchart of another measurement method according to an embodiment of this application;
FIG. 9 is a diagram 2 of a structure of a terminal device according to an embodiment of this application; and
FIG. 10 is a diagram of a structure of a network device according to an embodiment of this application.

**DESCRIPTION OF EMBODIMENTS**

For ease of understanding technical solutions provided in embodiments of this application, technologies related to this application are first described briefly. The brief descriptions are as follows:

1. Scheduling restriction (Scheduling restriction) between a measurement and data transmission:

In a related standard protocol of the 3rd generation partnership project (3rd generation partnership project, 3GPP) R15 to R18 protocol specification, the scheduling restriction between the measurement and the data transmission is described as follows: The scheduling restriction between the measurement and the data transmission means that if a terminal device enables a synchronization signal block (synchronization signal and PBCH block, SSB)-based measurement, the terminal device cannot send, on an SSB symbol for a measurement, a signal carried on a physical uplink control channel (physical uplink control channel, PUCCH) and/or a signal carried on a physical uplink shared channel (physical uplink shared channel, PUSCH) and/or a sounding reference signal (sounding reference signal, SRS), or cannot receive, on an SSB symbol for a measurement, a signal carried on a physical downlink control channel (physical downlink control channel, PDCCH) and/or a signal carried on a physical downlink shared channel (physical downlink shared channel, PDSCH) and/or a tracking reference signal (tracking reference signal, TRS) and/or a channel state information-reference signal (channel state information-reference signal, CSI-RS), but may perform data transmission on k SSB symbols in SSB measurement time configuration (SSB Measurement Time Configuration, SMTC) window duration other than consecutive SSB symbols for the measurement (If derive SSB-Index from cell is enabled the UE is not expected to transmit PUCCH/PUSCH/SRS or receive PDCCH/PDSCH/TRS/CSI-RS for CQI on SSB symbols to be measured, and on K data symbol(s) before each consecutive SSB symbols to be measured and K data symbol(s) after each consecutive SSB symbols to be measured within SMTC window duration). In other words, the scheduling restriction between the measurement and the data transmission means that the terminal device cannot perform the measurement and the data transmission at the same time.

In addition, there is also scheduling restriction between different measurements. As a result, the terminal device cannot perform multiple measurements at the same time. For example, the terminal device cannot perform an L1 measurement and an L3 measurement at the same time.

However, in addition to the foregoing record that the terminal device cannot perform the measurement and the data transmission at the same time, the terminal device cannot perform the data transmission at the same time during a measurement gap (GAP) of the terminal device. Specifically, a related protocol specifies that during a measurement GAP of a terminal device (During the per-UE measurement gaps the UE), the terminal device does not need to perform a receiving/sending operation with a corresponding evolved universal mobile telecommunications system terrestrial radio access network (evolved Universal Mobile Telecommunications System, E-UTRAN) primary cell (primary cell, PCell) (is not required to conduct reception/transmission from/to the corresponding E-UTRAN PCell).

In addition, during the measurement GAP of the terminal device, the terminal device may perform a random access procedure, that is, may communicate with a network device over a random access channel (random access channel, RACH).

2. Frequency range (frequency range, FR):

The frequency range is a range between a start frequency and a target frequency. Two frequency band ranges: FR1 and FR2 are defined in a standard protocol (for example, a related standard protocol of 3GPP) related to 5th generation mobile communication technology (5th generation mobile communication technology, 5G) new radio (new radio, NR). FR1 represents a low frequency band. For example, FR1 is 450 megahertz (MHz)-6000 MHz. FR2 represents a millimeter-wave high frequency band. For example, FR2 is 24250 megahertz (MHz)-52600 MHz.

3. Measurement period:

The measurement period is a time interval between any two consecutive measurements performed by the terminal device. The measurement period may be used in cell search, SSB index obtaining, and cell measurement scenarios. For terminal devices in different frequency ranges, formulas for determining a measurement period are also different. For example, a formula for determining a measurement period of a terminal device in FR1 is different from a formula for determining a measurement period of a terminal device in FR2.

For example, the measurement period of the terminal device in FR1 may satisfy the following Formula 1:

$$T_{\text{SSB\_measurement\_period\_intra}} = \max(200\text{ms}, \text{ceil}(5 \times K_p) \times SMTC_{\text{period}})^{\text{Note 1}} \times CSSF_{\text{intra}} \qquad \text{Formula 1}$$

max() indicates that a maximum value is taken. $T_{\text{SSB\_measurement\_period\_intra}}$ is a measurement period. $K_p$ is a scaling factor. $SMTC_{\text{period}}$ is an SMTC measurement occasion. $CSSF_{\text{intra}}$ is a carrier measurement performance scaling factor. For detailed descriptions of Formula 1, refer to descriptions of a related standard protocol of 3GPP. Details are not described herein.

For example, the measurement period of the terminal device in FR2 may satisfy the following Formula 2:

$$T_{SSB\_measurement\_period\_intra} = max(400ms, \quad Ceil(K_p \times M_{meas\_period \quad w/o\_gaps}) \times max(MGRP, \quad SMTC_{period})) \times CSSF_{intra}$$

Formula 2

$M_{meas\_period\_w/o\_gaps}$ is a factor related to a quantity of sweeping beams. $M_{meas\_period\_w/o\_gaps}$ is related to a capability of the terminal device. Generally, a larger power of the terminal device indicates a larger factor that is related to the quantity of sweeping beams and that corresponds to the terminal device. MGRP is a measurement gap repetition period. For meanings of other parameters, refer to the parameter descriptions of Formula 1. Details are not described herein again. For detailed descriptions of Formula 2, refer to descriptions of a related standard protocol of 3GPP. Details are not described herein.

It can be learned from Formula 1 and Formula 2 that, in a process of determining the measurement period of the terminal device in FR2, the factor related to the quantity of sweeping beams ($M_{meas\_period\_w/o\_gaps}$) is newly added, so that when other conditions (for example, the scaling factor and the SMTC measurement occasion) are the same, the measurement period of the terminal device in FR1 is shorter than the measurement period of the terminal device in FR2. For example, when signal quality of a serving cell or signal quality of an intra-frequency cell is measured, the measurement period of the terminal device in FR1 is 1.28 seconds (s), and the measurement period of the terminal device in FR2 is 5.12 seconds. In this example, the measurement period of the terminal device in FR2 is four times the measurement period of the terminal device in FR1. For another example, when the SMTC measurement occasion is 40 milliseconds (ms) and the quantity of sweeping beams is 24, the measurement period of the terminal device in FR1 is 200 milliseconds (ms), and the measurement period of the terminal device in FR2 is 960 ms. In this example, the measurement period of the terminal device in FR2 is approximately five times the measurement period of the terminal device in FR1.

According to the foregoing measurement period formulas, if the measurement period is not adjusted, and the terminal device performs a measurement based on the original measurement period, it is very likely that the terminal device cannot measure a signal in time because the measurement period is excessively long. Consequently, a measurement result reported by the terminal device is lagged, and a measurement delay is increased. Further, a problem such as mobility reselection, handover lag, or handover failure is caused, affecting mobility management performance. If the measurement period of the terminal device is blindly adjusted, and the terminal device performs a measurement based on an adjusted measurement period, other performance (for example, power consumption) of the terminal device may be affected, resulting in poor use experience of the terminal device. However, for the terminal device in FR2, a subcarrier spacing (subcarrier spacing, SCS), a bandwidth, and a sampling rate of the terminal device in FR2 are all large (for example, the SCS is 240 kilohertz (Hz), the bandwidth is 57.6 MHz, and the sampling rate is at least 61.44 MHz). In this way, the terminal device in FR2 has a high signal processing requirement in a measurement process. If the measurement period of the terminal device in FR2 is blindly adjusted, more severe impact is caused on performance of the terminal device in FR2.

Based on this, an embodiment of this application provides a measurement method. A terminal device may determine whether a mobility parameter of the terminal device meets a preset condition, and when the mobility parameter of the terminal device meets the preset condition, perform a first measurement based on a first measurement period shorter than a second measurement period, where the second measurement period is a measurement period for the terminal device to perform the first measurement when the mobility parameter does not meet the preset condition. Because the terminal device may perform the first measurement in time when the mobility parameter of the terminal device meets the preset condition, a problem that a measurement result reported by the terminal device is lagged can be avoided as much as possible. In other words, according to the measurement method provided in this embodiment of this application, the terminal device may adaptively select an appropriate measurement period for the first measurement based on the mobility parameter of the terminal device, to adaptively adjust the measurement period.

The following describes the technical solutions in embodiments of this application with reference to the accompanying drawings in embodiments of this application.

For ease of understanding of embodiments of this application, the following descriptions are provided before embodiments of this application are described.

1. In embodiments of this application, for ease of description, when numbering is involved, numbering may be performed consecutively starting from 1, or may be performed consecutively starting from 0, or may be performed starting from any parameter. It should be understood that the foregoing descriptions are all settings for ease of describing the technical solutions provided in embodiments of this application, but are not intended to limit the scope of embodiments of this application.

2. In embodiments of this application, "indication" may include a direct indication and an indirect indication, or may include an explicit indication and an implicit indication. Information indicated by a piece of information (for example, the following first indication information) is referred to as to-be-indicated information. In a specific implementation process, the to-be-indicated information is indicated in multiple manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when multiple pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into multiple pieces of sub-information for separate sending. In addition, sending periods and/or sending occasions of these pieces of sub-information may be the same or may be different. A specific sending method is not limited in embodiments of this application. The sending periods and/or the sending occasions of these pieces of sub-information may be predefined, for example, predefined according to a protocol, or may be configured by sending configuration information to a receiver device by a transmitter device. For example, the configuration information may include but is not limited to radio resource control signaling, for example, one or a combination of at least two of RRC signaling, MAC layer signaling, physical layer signaling, or DCI.

3. "Predefinition" or "preconfiguration" may be implemented by pre-storing corresponding code or a corresponding table in a device (for example, including a terminal device or a network device) or in another manner that may indicate related information. A specific implementation is not limited in embodiments of this application. "Storage" may be storage in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.

4. In embodiments of this application, "protocol" may be a standard protocol in the communication field, for example, may include a long term evolution (long term evolution, LTE) protocol, an NR protocol, and a related protocol applied to a future communication system. This is not limited in embodiments of this application.

5. In embodiments of this application, descriptions such as "when...", "in a case of...", and "if" all mean that a device (for example, a terminal device or a network device) performs corresponding processing in an objective case, but do not constitute a limitation on time, do not require the device (for example, the terminal device or the network device) to perform a determining action during implementation, and do not mean other limitations either.

6. In the descriptions of this application, "/" represents an "or" relationship between associated objects unless otherwise specified. For example, A/B may represent A or B. The term "and/or" in embodiments of this application describes only an association relationship between associated objects and indicates that three relationships may exist. For example, A and/or B may indicate the following three cases: Only A exists, both A and B exist, and only B exists, where A and B may be singular or plural. In addition, in the descriptions of embodiments of this application, unless otherwise specified, "multiple" means two or more. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Embodiments of this application are applicable to a long term evolution (long term LTE) system, an NR system (which may also be referred to as a 5G system), a vehicle to everything (vehicle to everything, V2X) system, an LTE-NR hybrid networking system, a device-to-device (device-to-device, D2D) system, a machine to machine (machine to machine, M2M) communication system, an internet of things (internet of thing, IoT) system (for example, a narrowband internet of things (narrowband internet of thing, NB-IoT) system), and another next-generation communication system. Alternatively, the communication system may be a non-3GPP communication system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the communication architecture and the emergence of new service scenarios, the technical solutions provided in embodiments of this application are also applicable to similar technical problems.

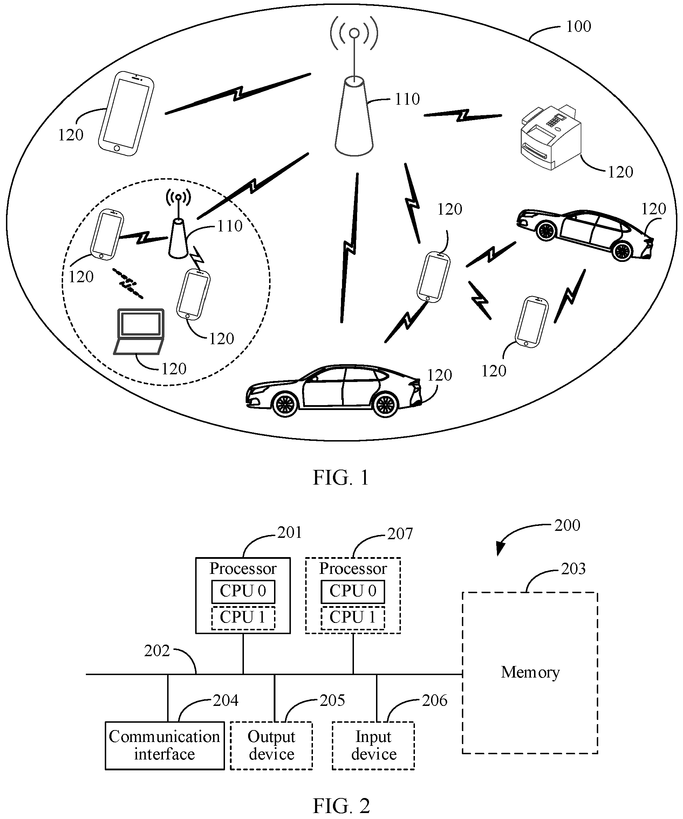

FIG. 1 is a diagram of a structure of a communication system according to an embodiment of this application. In FIG. 1, an example in which the communication system 100 includes at least one network device 110 and one or more terminal devices 120 connected to the network device 110 is used for description. It should be understood that, a quantity of terminal devices 120 and a quantity of network devices 110 in FIG. 1 are merely examples, and there may be more or fewer terminal devices and more or fewer network devices.

In a possible implementation, the terminal device performs a first measurement based on a first measurement period when a mobility parameter of the terminal device meets a preset condition. The first measurement period is shorter than a second measurement period. The second measurement period is a measurement period for the terminal device to perform the first measurement when the mobility parameter does not meet the preset condition. For a specific implementation and related technical effects of the solution, refer to subsequent method embodiments. Details are not described herein.

In another possible implementation, the network device sends first indication information to the terminal device when a mobility parameter of the terminal device meets a preset condition. Correspondingly, the terminal device receives the first indication information from the network device. The first indication information indicates the terminal device to perform a first measurement based on a first measurement period. The first measurement period is shorter than a second measurement period. The second measurement period is a measurement period for the terminal device to perform the first measurement when the mobility parameter does not meet the preset condition. For a specific implementation and related technical effects of the solution, refer to subsequent method embodiments. Details are not described herein.

In a possible implementation, the terminal device in embodiments of this application may be a device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal device may be mobile or fixed.

In a possible implementation, the network device in embodiments of this application may be a device communicating with the terminal device, for example, may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in a new radio (new radio, NR) system. Alternatively, the network device may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on an airplane platform or a satellite. In the NTN, a network device or an access device may serve as a layer 1 (L1) relay (relay), may serve as a base station, or may serve as an integrated access and backhaul (integrated access and backhaul, IAB) node. Alternatively, a first network device may be a device that is in an IoT and that implements functions of a base station, for example, a device that is in uncrewed aerial vehicle communication, V2X, D2D, or machine to machine (machine to machine, M2M) and that implements the functions of the base station.

In some possible scenarios, the network device in embodiments of this application may alternatively be a module or a unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, the network device may be a network device in an open radio access network (open RAN, ORAN) system or a module of the network device. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (also referred to as a small cell), a relay station, an access point, a home base station, a TRP, a transmission point (transmission point, TP), or a mobile switching center. This is not specifically limited in embodiments of this application.

In a possible implementation, in embodiments of this application, multiple antennas may be configured for both the network device and the terminal device, to support a massive multiple-input multiple-output (massive multiple-input multiple-output, Massive-MIMO) technology. Further, the network device and the terminal device may support both a single-user MIMO (single-user MIMO, SU-MIMO) technology and a multi-user MIMO (multi-user MIMO, MU-MIMO) technology. The MU-MIMO technology may be implemented based on a space division multiple access (space division multiple access, SDMA) technology. Because the multiple antennas are configured, the network device and the terminal device may further flexibly support a single-input single-output (Single-Input Single-Output, SISO) technology, a single-input multiple-output (Single-Input multiple-Output, SIMO) technology, and a multiple-input single-output (multiple-input single-output, MISO) technology, to implement various diversity (for example, but not limited to transmit diversity and receive diversity) and multiplexing technologies. The diversity technology may include but is not limited to a transmit diversity (transmit diversity, TD) technology and a receive diversity (receive diversity, RD) technology, and the multiplexing technology may be a spatial multiplexing (spatial multiplexing) technology.

In a possible implementation, the network device and the terminal device in embodiments of this application may also be referred to as communication apparatuses, and each may be a general-purpose device or a special-purpose device. This is not specifically limited in embodiments of this application.

In a possible implementation, related functions of the terminal device or the network device in embodiments of this application may be implemented by one device, may be jointly implemented by multiple devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

For example, the related functions of the terminal device or the network device in embodiments of this application may be implemented by a communication apparatus 200 in FIG. 2. FIG. 2 is a diagram of a structure of a communication apparatus 200 according to an embodiment of this application. The communication apparatus 200 includes one or more processors 201, a communication line 202, and at least one communication interface (in FIG. 2, an example in which a communication interface 204 and one processor 201 are included is merely used for description), and may further include a memory 203.

The processor 201 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 202 may include a path, to connect different components.

The communication interface 204 may be a transceiver module configured to communicate with another device or a communication network, for example, the Ethernet, a RAN, or a wireless local area network (wireless local area network, WLAN). For example, the transceiver module may be an apparatus like a transceiver or a transceiver machine. In a possible implementation, the communication interface 204 may alternatively be a transceiver circuit in the processor 201, and is configured to implement signal input and signal output of the processor.

The memory 203 may be an apparatus with a storage function. For example, the memory may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the communication line 202. Alternatively, the memory may be integrated with the processor.

The memory 203 is configured to store computer-executable instructions for executing the solutions in this application, and the processor 201 controls the execution. The processor 201 is configured to execute the computer-executable instructions stored in the memory 203, to implement the measurement method provided in embodiments of this application.

Alternatively, in embodiments of this application, the processor 201 may perform a processing-related function in a measurement method provided in the following embodiments of this application, and the communication interface 204 is responsible for communicating with another device or a communication network. This is not specifically limited in embodiments of this application.

In a possible implementation, the memory 203 in this embodiment of this application may be further configured to store information or a parameter described in the following embodiments, for example, first indication information.

The computer-executable instructions in embodiments of this application may also be referred to as application program code. This is not specifically limited in embodiments of this application.

During specific implementation, in an embodiment, the processor 201 may include one or more CPUs, for example, a CPU 0 and a CPU 1 in FIG. 2.

During specific implementation, in an embodiment, the communication apparatus 200 may include multiple processors such as the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 200 may further include an output device 205 and an input device 206. The output device 205 communicates with the processor 201, and may display information in multiple manners.

The communication apparatus 200 may be a general-purpose apparatus or a special-purpose apparatus. For example, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in embodiments of this application.

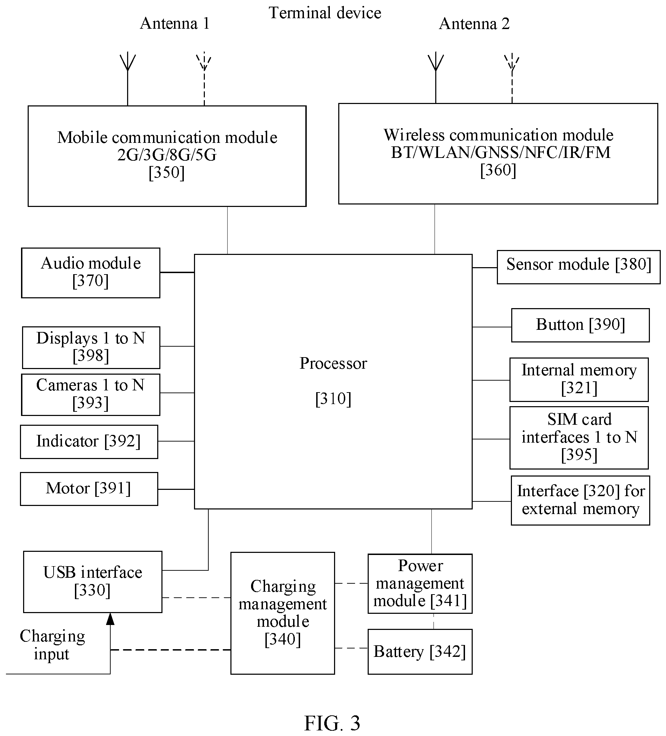

With reference to the diagram of the structure of the communication apparatus 200 shown in FIG. 2, an example in which the communication apparatus 200 is the terminal device 120 in FIG. 1 is used. For example, FIG. 3 shows a specific structural form of the terminal device according to an embodiment of this application.

In some embodiments, a function of the processor 201 in FIG. 2 may be implemented by a processor 310 in FIG. 3.

In some embodiments, a function of the communication interface 204 in FIG. 2 may be implemented by an antenna 1, an antenna 2, a mobile communication module 350, a wireless communication module 360, and the like in FIG. 3.

The antenna 1 and the antenna 2 are configured to transmit and receive electromagnetic wave signals. Each antenna in the terminal device may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 350 may provide a wireless communication solution that is applied to the terminal device and that includes a 2nd generation mobile communication technology (2nd generation mobile communication technology, 2G)/3rd generation mobile communication technology (3rd generation mobile communication technology, 3G)/4th generation mobile communication technology (4th generation mobile communication technology, 4G)/5G, or the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit a processed electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules of the mobile communication module 350 may be disposed in the processor 310. In some embodiments, at least some functional modules of the mobile communication module 350 may be disposed in a same device as at least some modules of the processor 310.

The wireless communication module 360 may be one or more components integrating at least one communication processing module. The wireless communication module 360 receives an electromagnetic wave through the antenna 2, performs frequency modulation and filtering processing on the electromagnetic wave signal, and sends a processed signal to the processor 310. The wireless communication module 360 may further receive a to-be-sent signal from the processor 310, perform frequency modulation and amplification on the signal, and convert the signal into an electromagnetic wave through the antenna 2 for radiation.

In some embodiments, the antenna 1 of the terminal device is coupled to the mobile communication module 350, and the antenna 2 is coupled to the wireless communication module 360, so that the terminal device may communicate with a network and other devices by using a wireless communication technology.

In some embodiments, a function of the memory 203 in FIG. 2 may be implemented by an internal memory 321 or an external memory (for example, a micro SD card) connected to an interface 320 for external memory in FIG. 3, or the like.

In some embodiments, a function of the output device 205 in FIG. 2 may be implemented by a display 394 in FIG. 3. The display 394 includes a display panel.

In some embodiments, a function of the input device 206 in FIG. 2 may be implemented by a mouse, a keyboard, a touchscreen device, or a sensor module 380 in FIG. 3. In some embodiments, as shown in FIG. 3, the terminal device may further include one or more of an audio module 370, a camera 393, an indicator 392, a motor 391, a button 390, a SIM card interface 395, a USB interface 330, a charging management module 340, a power management module 341, and a battery 342. This is not specifically limited in embodiments of this application.

It may be understood that the structure shown in FIG. 3 constitute no specific limitation on the terminal device. For example, in some other embodiments of this application, the terminal device may include more or fewer components than those shown in the figure, or some components may be combined, some components may be split, or different component arrangements may be used. The components shown in the figure may be implemented by hardware, software, or a combination of software and hardware.

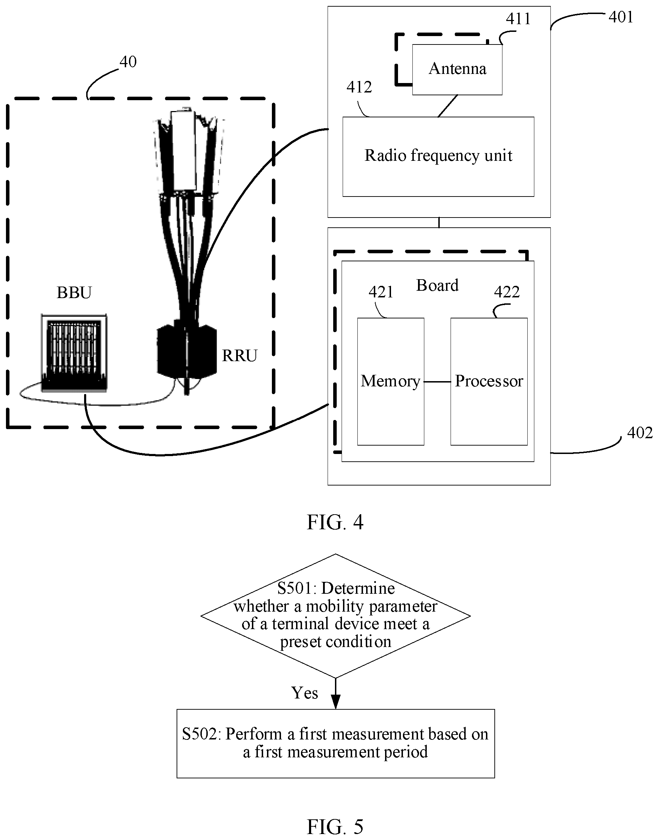

Alternatively, with reference to the diagram of the structure of the communication apparatus 200 shown in FIG. 2, an example in which the communication apparatus 200 is the network device 110 in FIG. 1 and the network device 110 is a base station is used. For example, FIG. 4 shows a specific structural form of a base station 40 according to an embodiment of this application.

The base station 40 includes one or more radio frequency units (for example, an RRU 401) and one or more BBUs 402.

The RRU 401 may be referred to as a transceiver unit, a transceiver machine, a transceiver circuit, a transceiver, or the like, and may include at least one antenna feeder system (that is, antenna) 411 and a radio frequency unit 412. The RRU 401 is mainly configured to send and receive radio frequency signals and perform conversion between a radio frequency signal and a baseband signal. In some embodiments, a function of the communication interface 204 in FIG. 2 may be implemented by the RRU 401 in FIG. 4.

The BBU 402 is a control center of the network device, may also be referred to as a processing unit, and is mainly configured to complete baseband processing functions such as channel coding, multiplexing, modulation, and spreading.

In some embodiments, the BBU 402 may include one or more boards. Multiple boards may jointly support a radio access network (such as an LTE network) of a single access standard, or may separately support radio access networks (such as an LTE network, a 5G network, or another network) of different access standards. The BBU 402 further includes a memory 421 and a processor 422. The memory 421 is configured to store necessary instructions and data. The processor 422 is configured to control the network device to perform a necessary action. The memory 421 and the processor 422 may serve one or more boards. In other words, a memory and a processor may be disposed on each board. Alternatively, multiple boards may share a same memory and a same processor. In addition, a necessary circuit may further be disposed on each board. In some embodiments, a function of the processor 201 in FIG. 2 may be implemented by the processor 422 in FIG. 4, and a function of the memory 403 in FIG. 4 may be implemented by the memory 421 in FIG. 4.

In a possible implementation, the RRU 401 and the BBU 402 in FIG. 4 may be physically disposed together, or may be physically separated, for example, a distributed base station. This is not specifically limited in embodiments of this application.

The following describes the measurement method provided in embodiments of this application in detail with reference to FIG. 5.

It should be noted that in the following embodiments of this application, a name of a message between network elements, a name of each parameter, a name of each piece of information, or the like is merely an example, and may be another name in another embodiment. This is not specifically limited in the method provided in embodiments of this application.

It may be understood that in embodiments of this application, each network element may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

FIG. 5 shows an example of a measurement method according to an embodiment of this application. The method is performed by a terminal device for description. Certainly, an action of the terminal device in the method may alternatively be performed by an apparatus/module in the terminal device, for example, a chip, a processor, or a processing unit in the terminal device. This is not specifically limited in this embodiment of this application. For example, as shown in FIG. 5, the measurement method includes the following steps.

S501: The terminal device determines whether a mobility parameter of the terminal device meets a preset condition.

For example, the mobility parameter in this embodiment of this application may include at least one of the following: signal quality of the terminal device, a change rate of signal quality of the terminal device, or a movement speed of the terminal device. Certainly, the foregoing is merely an example description of the mobility parameter, and the mobility parameter may further include another parameter. This is not limited in this application.

In a possible implementation, the preset condition in this embodiment of this application includes that the signal quality of the terminal device is less than or equal to a first preset threshold, and/or the change rate of the signal quality of the terminal device is greater than or equal to a second preset threshold, and/or the movement speed of the terminal device is greater than or equal to a third preset threshold.

That is, in this embodiment of this application, the preset condition may be set based on three dimensions: the signal quality of the terminal device, the change rate of the signal quality of the terminal device, or the movement speed of the terminal device. If the signal quality of the terminal device is less than or equal to the first preset threshold, and/or the change rate of the signal quality of the terminal device is greater than or equal to the second preset threshold, and/or the movement speed of the terminal device is greater than or equal to the third preset threshold, it indicates that the signal quality of the terminal device is poor or the signal quality of the terminal device easily fluctuates. In this case, the terminal device needs to perform a first measurement in time, so that a signal measurement result of the terminal device can be learned of in time.

For example, if the signal quality of the terminal device is less than or equal to the first preset threshold, there is a high probability that the terminal device is located at a cell edge or in a weak coverage area. If the change rate of the signal quality of the terminal device is greater than or equal to the second preset threshold, and/or the movement speed of the terminal device is greater than or equal to the third preset threshold, there is a high probability that the terminal device is in a fast moving state.

In a possible implementation, if the mobility parameter may include the signal quality of the terminal device, the change rate of the signal quality of the terminal device, and the movement speed of the terminal device, an implementation process in which the terminal device determines the mobility parameter may be as follows: The terminal device may determine signal quality of the terminal device obtained through a latest measurement as the signal quality of the terminal device in the mobility parameter. The terminal device determines the change rate of the signal quality of the terminal device in the mobility parameter based on signal quality of the terminal device obtained through latest two measurements and according to a change rate calculation formula. The terminal device may determine the movement speed of the terminal device in the mobility parameter based on a correspondence between the movement speed and the determined change rate of the signal quality of the terminal device. The change rate of the signal quality is positively correlated with the movement speed. Alternatively, the terminal device obtains a movement speed of the terminal device from a sensor of the terminal device, and determines the movement speed as the movement speed of the terminal device in the mobility parameter.

It should be understood that the foregoing is merely an example description of the implementation process in which the terminal device determines the mobility parameter. The terminal device may alternatively determine the mobility parameter based on another method. This is not limited in this application.

In a possible implementation, before the terminal device determines whether the mobility parameter of the terminal device meets the preset condition (that is, S501), a network device may send a measurement configuration parameter to the terminal device. Correspondingly, the terminal device may receive the measurement configuration parameter from the network device. The measurement configuration parameter may include a name of the mobility parameter and a corresponding preset condition.

For example, the signal quality may include at least one of the following: a reference signal received power (reference signal received power, RSRP), reference signal received quality (reference signal received quality, RSRQ), or a received signal strength indication (received signal strength indication, RSSI). The foregoing is merely an example description of the signal quality. The signal quality may further include another parameter (for example, a signal to interference plus noise ratio (signal to interference plus noise ratio, SINR)). This is not limited in this embodiment of this application.

In a possible implementation, before the terminal device determines whether the mobility parameter of the terminal device meets the preset condition (that is, S501), the terminal device may determine whether the terminal device supports adaptive adjustment of a measurement period. If the terminal device supports the adaptive adjustment of the measurement period, the terminal device may perform the steps shown in FIG. 5. If the terminal device does not support the adaptive adjustment of the measurement period, the terminal device may not perform the steps shown in FIG. 5.

For example, whether the terminal device supports the adaptive adjustment of the measurement period may be indicated by a number. For example, the terminal device may use a number 0 to indicate that the terminal device does not support the adaptive adjustment of the measurement period, and the terminal device may use a number 1 to indicate that the terminal device supports the adaptive adjustment of the measurement period.

In a possible implementation, the terminal device may send second capability indication information to the network device, where the second capability indication information indicates whether the terminal device supports the adaptive adjustment of the measurement period. Correspondingly, the network device receives the first capability indication information from the terminal device, to learn whether the terminal device supports the adaptive adjustment of the measurement period.

S502: The terminal device performs the first measurement based on a first measurement period when the mobility parameter of the terminal device meets the preset condition. The first measurement period is shorter than a second measurement period. The second measurement period is a measurement period for the terminal device to perform the first measurement when the mobility parameter of the terminal device does not meet the preset condition.

As described above, in a possible implementation, in this embodiment of this application, that the mobility parameter of the terminal device meets the preset condition may be that the signal quality of the terminal device is less than or equal to the first preset threshold, and/or the change rate of the signal quality of the terminal device is greater than or equal to the second preset threshold, and/or the movement speed of the terminal device is greater than or equal to the third preset threshold. In this case, the terminal device may perform the first measurement based on the first measurement period (that is, a shorter measurement period), to learn of a measurement result in time, and avoid lagging of the measurement result as much as possible.

It can be learned from the related descriptions of the foregoing "formula for determining the measurement period of the terminal device in FR2" that direct factors that affect determining of the first measurement period may include a quantity of sweeping beams, a carrier measurement performance scaling factor (carrier specific scaling factor, CSSF), and the like. However, because a quantity of parallel antenna panels (panel) affects the quantity of sweeping beams, the quantity of parallel antenna panels is used as an indirect factor that affects determining of the first measurement period. In view of this, the terminal device may determine the first measurement period based on at least one of a preset target quantity of sweeping beams, a preset target CSSF, and a preset target quantity of parallel antenna panels. For example, when the target quantity of sweeping beams corresponding to the terminal device is less than a current quantity of sweeping beams of the terminal device, the first measurement period is determined based on the target quantity of sweeping beams corresponding to the terminal device. For another example, when the target quantity of parallel antenna panels corresponding to the terminal device is greater than a current quantity of parallel antenna panels of the terminal device, the first measurement period is determined based on the target quantity of parallel antenna panels corresponding to the terminal device. For another example, when the target CSSF corresponding to the terminal device is less than a current CSSF of the terminal device, the first measurement period is determined based on the target CSSF corresponding to the terminal device. For another example, when the target quantity of sweeping beams corresponding to the terminal device is less than the current quantity of sweeping beams of the terminal device, and the target quantity of parallel antenna panels corresponding to the terminal device is greater than the current quantity of parallel antenna panels of the terminal device, the first measurement period is determined based on the target quantity of parallel antenna panels corresponding to the terminal device and the target quantity of parallel antenna panels corresponding to the terminal device. For another example, when the target quantity of sweeping beams corresponding to the terminal device is less than the current quantity of sweeping beams of the terminal device, and the target CSSF corresponding to the terminal device is less than the current CSSF of the terminal device, the first measurement period is determined based on the target quantity of parallel antenna panels corresponding to the terminal device and the target CSSF corresponding to the terminal device.

It should be understood that the foregoing is merely an example description of determining the first measurement period by the terminal device. The terminal device may alternatively determine the first measurement period based on another factor (for example, an SMTC measurement occasion). This is not limited in this embodiment of this application.

In a possible implementation, the terminal device may set, based on experience, the target quantity of sweeping beams corresponding to the terminal device. For example, the terminal device sets the target quantity of sweeping beams corresponding to the terminal device to 4. Certainly, the foregoing is merely an example description of the target quantity of sweeping beams corresponding to the terminal device. The target quantity of sweeping beams corresponding to the terminal device may alternatively be another value (for example, 6). This is not limited in this application.

In another possible implementation, the terminal device may determine, based on an artificial intelligence (artificial intelligence, AI) technology and/or a machine learning (machine learning, ML) technology, the target quantity of sweeping beams corresponding to the terminal device.

In an example, if the terminal device determines a measurement period according to a formula recorded in the 3GPP R18 protocol, the terminal device may determine the determined measurement period as the first measurement period, and shorten the first measurement period in an encryption manner, to obtain the second measurement period. If the terminal device determines a measurement period according to a formula recorded in the 3GPP R19 protocol, the terminal device may determine the determined measurement period as the second measurement period, and prolong the first measurement period in a relaxing manner, to obtain the first measurement period.

In a possible implementation, the terminal device may further send first feedback information to the network device. Correspondingly, the network device receives the first feedback information from the terminal device. The first feedback information is used to notify the network device of a current measurement status of the terminal device, that is, the terminal device performs the first measurement based on the first measurement period. In this case, the current measurement status of the terminal device may be indicated by a newly defined measurement event (for example, an A1 measurement event). Certainly, the current measurement status of the terminal device may alternatively be displayed by using another method. This is not limited in this application.

An embodiment of this application provides a measurement method. A terminal device may determine whether a mobility parameter of the terminal device meets a preset condition, and when the mobility parameter of the terminal device meets the preset condition, perform a first measurement based on a first measurement period shorter than a second measurement period, where the second measurement period is a measurement period for the terminal device to perform the first measurement when the mobility parameter does not meet the preset condition. Because the terminal device may perform the first measurement in time when the mobility parameter of the terminal device meets the preset condition, a problem that a measurement result reported by the terminal device is lagged can be avoided as much as possible. In other words, according to the measurement method provided in this embodiment of this application, the terminal device may adaptively select an appropriate measurement period for the first measurement based on the mobility parameter of the terminal device, to adaptively adjust the measurement period.

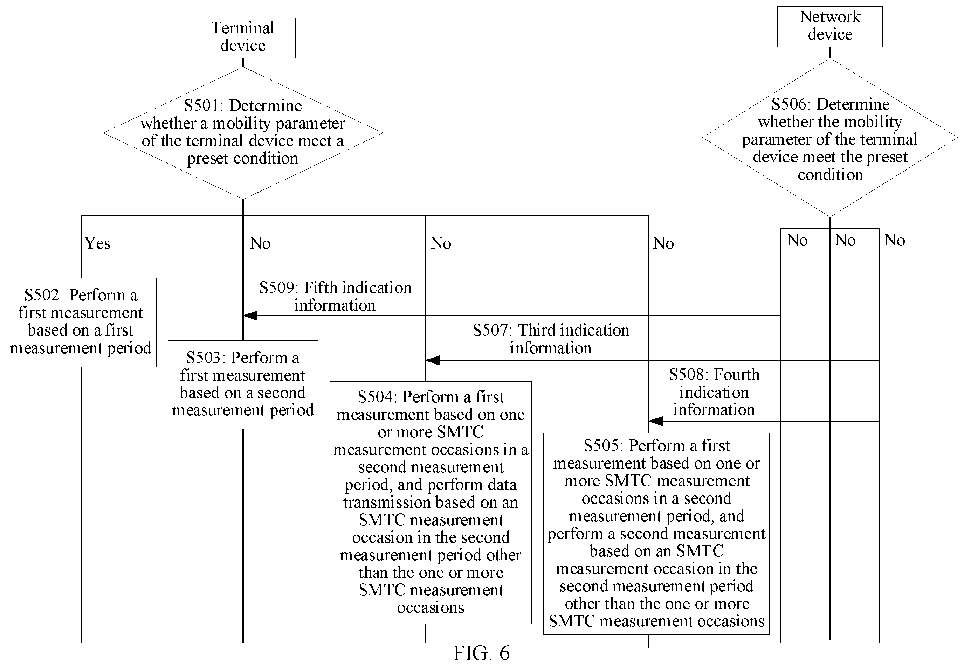

Further, in a possible implementation, if the mobility parameter of the terminal device does not meet the preset condition, the terminal device may determine whether the terminal device supports a scheduling restriction removal capability, to obtain the following two cases: Case 1 is that the terminal device does not support the scheduling restriction removal capability, and Case 2 is that the terminal device supports the scheduling restriction removal capability. The scheduling restriction removal capability indicates that the terminal device can remove scheduling restriction, so that the terminal device can perform both the first measurement and data transmission or a second measurement in a same measurement period. For example, as shown in FIG. 6, the measurement method provided in this embodiment of this application further includes step S503, step S504, or step S505.

S503: When the mobility parameter of the terminal device does not meet the preset condition, the terminal device performs the first measurement based on the second measurement period.

In this implementation, the terminal device does not support the scheduling restriction removal capability. Therefore, the terminal device needs to perform scheduling restriction, and cannot perform the first measurement and the data transmission at the same time in the second measurement period, and cannot perform the first measurement and the second measurement at the same time in the second measurement period. Therefore, in this implementation, the terminal device can perform only the first measurement based on the second measurement period, to avoid a problem that the first measurement cannot be normally performed due to the scheduling restriction.

In a possible implementation, the terminal device may further send second feedback information to a network device. Correspondingly, the network device receives the second feedback information from the terminal device. The second feedback information is used to notify the network device of a current measurement status of the terminal device, that is, the terminal device performs the first measurement based on the second measurement period. In this case, the current measurement status of the terminal device may be indicated by a newly defined measurement event (for example, an A2 measurement event). Certainly, the current measurement status of the terminal device may alternatively be displayed by using another method. This is not limited in this application.

S504: When the mobility parameter of the terminal device does not meet the preset condition, the terminal device performs the first measurement based on one or more SMTC measurement occasions in the second measurement period, and performs data transmission based on an SMTC measurement occasion in the second measurement period other than the one or more SMTC measurement occasions.

In this implementation, the terminal device supports the scheduling restriction removal capability. Therefore, the terminal device can perform the first measurement and the data transmission at the same time in the second measurement period.

It may be understood that, in this embodiment of this application, the terminal device splits the second measurement period to obtain a part of SMTC measurement occasions for the data transmission. In this way, a quantity of time domain resources used for the data transmission can be increased, to improve a throughput of the terminal device.

In a possible implementation, the terminal device may further send third feedback information to the network device. Correspondingly, the network device receives the third feedback information from the terminal device. The third feedback information is used to notify the network device of a current measurement status of the terminal device, that is, the terminal device performs the first measurement based on the one or more SMTC measurement occasions in the second measurement period, and performs the data transmission based on the SMTC measurement occasion in the second measurement period other than the one or more SMTC measurement occasions. In this case, the current measurement status of the terminal device may be indicated by a newly defined measurement event (for example, an A3 measurement event). Certainly, the current measurement status of the terminal device may alternatively be displayed by using another method. This is not limited in this application.

Optionally, the SMTC measurement occasion may alternatively be replaced with a measurement GAP measurement occasion. In view of this, S504 may be replaced with S504A. S504A: When the mobility parameter of the terminal device does not meet the preset condition, the terminal device performs the first measurement based on one or more measurement GAP measurement occasions in the second measurement period, and performs data transmission based on a measurement GAP measurement occasion in the second measurement period other than the one or more measurement GAP measurement occasions. However, for related descriptions of S504A, refer to the related descriptions of S504 for understanding. Details are not described herein again.

S505: When the mobility parameter of the terminal device does not meet the preset condition, the terminal device performs the first measurement based on one or more SMTC measurement occasions in the second measurement period, and performs a second measurement based on an SMTC measurement occasion in the second measurement period other than the one or more SMTC measurement occasions.

In a possible implementation, the terminal device may further send fourth feedback information to the network device. Correspondingly, the network device receives the fourth feedback information from the terminal device. The fourth feedback information is used to notify the network device of a current measurement status of the terminal device, that is, the terminal device performs the first measurement based on the one or more SMTC measurement occasions in the second measurement period, and performs the second measurement based on the SMTC measurement occasion in the second measurement period other than the one or more SMTC measurement occasions. In this case, the current measurement status of the terminal device may be indicated by a newly defined measurement event (for example, an A4 measurement event). Certainly, the current measurement status of the terminal device may alternatively be displayed by using another method. This is not limited in this application.

In this implementation, the terminal device supports the scheduling restriction removal capability. Therefore, the terminal device may perform the first measurement and the second measurement at the same time in the second measurement period.

It may be understood that, in this embodiment of this application, the terminal device splits the second measurement period to obtain a part of SMTC measurement occasions for the second measurement. In this way, a quantity of time domain resources used for the second measurement can be increased, to improve a measurement capability of the second measurement.

Optionally, the SMTC measurement occasion may alternatively be replaced with a measurement GAP measurement occasion. In view of this, S505 may be replaced with S505A. S505A: When the mobility parameter of the terminal device does not meet the preset condition, the terminal device performs the first measurement based on one or more measurement GAP measurement occasions in the second measurement period, and performs a second measurement based on a measurement GAP measurement occasion in the second measurement period other than the one or more measurement GAP measurement occasions. However, for related descriptions of S505A, refer to the related descriptions of S505 for understanding. Details are not described herein again.

It can be learned from the foregoing descriptions that in Case 2, one part of SMTC measurement occasions in the second measurement period may be used for the first measurement, and the other part of SMTC measurement occasions in the second measurement period may be used for the second measurement or the data transmission. In view of this, the terminal device may determine, in the following two implementations, the one or more SMTC measurement occasions for performing the first measurement in the second measurement period and the one or more SMTC measurement occasions for performing the second measurement or the data transmission in the second measurement period.

In an implementation, the terminal device may determine, according to a first SMTC rule, the one or more SMTC measurement occasions for performing the first measurement in the second measurement period and the one or more SMTC measurement occasions for performing the second measurement or the data transmission in the second measurement period, where the first SMTC rule indicates the one or more SMTC measurement occasions for performing the first measurement in the second measurement period.

In this embodiment of this application, that the first SMTC rule indicates the one or more SMTC measurement occasions for performing the first measurement in the second measurement period may include the following two cases:

The first SMTC rule includes indication information of the one or more SMTC measurement occasions for performing the first measurement in the second measurement period.

Alternatively, the first SMTC rule includes the one or more SMTC measurement occasions for performing the second measurement or the data transmission in the second measurement period.

When the first SMTC rule includes indication information of the one or more SMTC measurement occasions for performing the first measurement in the second measurement period:

If the terminal device and the network device agree on the one or more SMTC measurement occasions for performing the first measurement in the second measurement period, the terminal device may directly determine the first SMTC rule. For example, the terminal device may determine the first SMTC rule based on a quantity of SMTCs for a measurement and a rule that is pre-agreed on by the terminal device and the network device to select the one or more SMTC measurement occasions for performing the first measurement in the second measurement period. In this solution, the first SMTC rule does not need to be determined by exchanging signaling with the network device, to reduce signaling overheads between the terminal device and the network device. If the terminal device and the network device agree on the one or more SMTC measurement occasions for performing the second measurement or the data transmission in the second measurement period, the terminal device may determine the first SMTC rule based on the SMTC measurement occasion in the second measurement period other than the one or more SMTC measurement occasions for the second measurement or the data transmission, that is, indirectly determine the first SMTC rule. For example, the terminal device may determine, based on a quantity of SMTCs for a measurement and a rule that is pre-agreed on by the terminal device and the network device to select the one or more SMTC measurement occasions for performing the second measurement or the data transmission in the second measurement period, the one or more SMTC measurement occasions for performing the second measurement or the data transmission in the second measurement period. Further, the terminal device determines the first SMTC rule based on the SMTC measurement occasion in the second measurement period other than the one or more SMTC measurement occasions for performing the second measurement or the data transmission in the second measurement period. In this solution, the first SMTC rule does not need to be determined by exchanging signaling with the network device, to reduce signaling overheads between the terminal device and the network device. When the first SMTC rule includes the one or more SMTC measurement occasions for performing the second measurement or the data transmission in the second measurement period:

If the terminal device and the network device agree on the one or more SMTC measurement occasions for performing the second measurement or the data transmission in the second measurement period, the terminal device may directly determine the first SMTC rule. For example, the terminal device may determine the first SMTC rule based on a quantity of SMTCs for a measurement and a rule that is pre-agreed on by the terminal device and the network device to select the one or more SMTC measurement occasions for performing the second measurement or the data transmission in the second measurement period. In this solution, the first SMTC rule does not need to be determined by exchanging signaling with the network device, to reduce signaling overheads between the terminal device and the network device. If the terminal device and the network device agree on the one or more SMTC measurement occasions for performing the first measurement in the second measurement period, the terminal device may determine the first SMTC rule based on the SMTC measurement occasion in the second measurement period other than the one or more SMTC measurement occasions for performing the first measurement in the second measurement period, that is, indirectly determine the first SMTC rule. For example, the terminal device may determine, based on a quantity of SMTCs for a measurement and a rule that is pre-agreed on by the terminal device and the network device to select the one or more SMTC measurement occasions for performing the first measurement in the second measurement period, the one or more SMTC measurement occasions for performing the first measurement in the second measurement period. Further, the terminal device determines the first SMTC rule based on the SMTC measurement occasion in the second measurement period other than the one or more SMTC measurement occasions for performing the first measurement in the second measurement period.

Optionally, in this implementation, the terminal device may further send the quantity of SMTCs for the measurement to the network device, where the quantity of SMTCs for the measurement is a quantity of SMTC measurement occasions that are expected to be occupied, in multiple SMTC measurement occasions included in the second measurement period, when the terminal device performs the first measurement. Correspondingly, the network device receives the quantity of SMTCs for the measurement from the terminal device, and determines the first SMTC rule based on the quantity of SMTCs for the measurement and the rule that is pre-agreed on by the terminal device and the network device to select the one or more SMTC measurement occasions for performing the first measurement in the second measurement period or the rule that is pre-agreed on by the terminal device and the network device to select the one or more SMTC measurement occasions for performing the second measurement or the data transmission in the second measurement period. In this way, the network device may also learn of the first SMTC rule, so that the network device can assist, according to the first SMTC rule, the terminal device in performing the first measurement, the second measurement, or the data transmission. This is not specifically limited in this embodiment of this application.

In some examples, the rule for selecting the one or more SMTC measurement occasions for performing the first measurement in the second measurement period may be: performing continuous selection by using a $1^{st}$ SMTC measurement occasion in the second measurement period as a start point.

Alternatively, the rule for selecting the one or more SMTC measurement occasions for performing the first measurement in the second measurement period may be: performing selection at an odd-numbered location by using a 1st SMTC measurement occasion in the second measurement period as a start point.

Alternatively, the rule for selecting the one or more SMTC measurement occasions for performing the first measurement in the second measurement period may be: performing selection at an even-numbered location by using a 1st SMTC measurement occasion in the second measurement period as a start point.

Alternatively, the rule for selecting the one or more SMTC measurement occasions for performing the first measurement in the second measurement period may be: sequentially performing selection from at least one selection period based on a specified selection quantity and by using a specified moment in the second measurement period as a start point. For example, two SMTC measurement occasions are sequentially selected from each of four selection periods by using a system frame number (system frame number, SFN) 0 as a start point.

Optionally, the SMTC measurement occasion may alternatively be replaced with a measurement GAP measurement occasion. In view of this, in this implementation, the terminal device may determine, according to a first measurement GAP rule, the one or more measurement GAP measurement occasions for performing the first measurement in the second measurement period and the one or more measurement GAP measurement occasions for performing the second measurement or the data transmission in the second measurement period. The first measurement GAP rule indicates the one or more measurement GAP measurement occasions for performing the first measurement in the second measurement period. However, for related descriptions of determining, by the terminal device according to the first measurement GAP rule, the one or more measurement GAP measurement occasions for performing the first measurement and the one or more measurement GAP measurement occasions for performing the second measurement or the data transmission, refer to the foregoing descriptions of corresponding locations. Details are not described herein again.

In another implementation, the terminal device may send a quantity of SMTCs for a measurement to the network device. Correspondingly, the network device receives the quantity of SMTCs for the measurement from the terminal device, and sends second indication information to the terminal device. The quantity of SMTCs for the measurement is a quantity of SMTC measurement occasions that are expected to be occupied, in multiple SMTC measurement occasions included in the second measurement period, when the terminal device performs the first measurement. The second indication information indicates a first SMTC rule. Further, the terminal device may determine, according to the first SMTC rule, the one or more SMTC measurement occasions for performing the first measurement in the second measurement period and the one or more SMTC measurement occasions for performing the second measurement or the data transmission in the second measurement period.

It should be understood that in this implementation, the first SMTC rule is determined by the network device, that is, the network device may configure, for the terminal device, a rule for selecting the one or more SMTC measurement occasions for performing the first measurement in the second measurement period or a rule for selecting the one or more SMTC measurement occasions for performing the second measurement or the data transmission in the second measurement period, and determine the first SMTC rule based on the quantity of SMTCs for the measurement reported by the terminal device and the configured selection rule. For related descriptions of the first SMTC rule, refer to the related descriptions in the foregoing implementation. Details are not described herein again.

In this implementation, compared with a predetermined first SMTC rule, the first SMTC rule indicated by the network device can be more suitable for an actual network status of the terminal device. In this way, the terminal device determines, according to the first SMTC rule indicated by the network device, the one or more SMTC measurement occasions for performing the first measurement in the second measurement period and the one or more SMTC measurement occasions for performing the second measurement or the data transmission in the second measurement period, to improve accuracy of allocating SMTC measurement occasions in the second measurement period by the terminal device.

Optionally, the SMTC measurement occasion may alternatively be replaced with a measurement GAP measurement occasion. In view of this, in this implementation, the terminal device may send a quantity of measurement GAPs for a measurement to the network device. Correspondingly, the network device receives the quantity of measurement GAPs for the measurement from the terminal device, and sends sixth indication information to the terminal device. The quantity of measurement GAPs for the measurement is a quantity of measurement GAP measurement occasions that are expected to be occupied, in multiple measurement GAP measurement occasions included in the second measurement period, when the terminal device performs the first measurement. The sixth indication information indicates a first measurement GAP rule. Further, the terminal device may determine, according to the first measurement GAP rule, the one or more measurement GAP measurement occasions for performing the first measurement in the second measurement period and the one or more measurement GAP measurement occasions for performing the second measurement or the data transmission in the second measurement period. However, for related descriptions of sending, by the terminal device, the quantity of measurement GAPs for the measurement to the network device and receiving the sixth indication information from the network device, refer to the foregoing descriptions of corresponding locations for understanding. Details are not described herein again.

In a possible implementation, the terminal device may send first capability indication information to the network device, where the first capability indication information indicates whether the terminal device supports a scheduling restriction removal capability. Correspondingly, the network device receives the first capability indication information from the terminal device, to learn whether the terminal device supports the scheduling restriction removal capability.

It can be learned from the foregoing that, the terminal device may perform the data transmission, and may further perform the second measurement on the SMTC measurement occasion in the second measurement period other than the one or more SMTC measurement occasions. In this case, the network device may indicate the terminal device, to notify the terminal device whether to perform the data transmission or the second measurement on the SMTC measurement occasion in the second measurement period other than the one or more SMTC measurement occasions. For example, interaction between the terminal device and the network device is used as an example for description. As shown in FIG. 6, the measurement method provided in this embodiment of this application further includes the following step.

S506: The network device determines whether the mobility parameter of the terminal device meets the preset condition.

For related descriptions of determining, by the network device, whether the mobility parameter of the terminal device meets the preset condition, refer to the related descriptions of determining, by the terminal device, whether the mobility parameter of the terminal device meets the preset condition in step S501. Details are not described herein again.

Further, in this embodiment of this application, if the mobility parameter of the terminal device does not meet the preset condition, the measurement method provided in this embodiment of this application further includes step S507, step S508, or step S509.

S507: When the mobility parameter does not meet the preset condition, the network device sends third indication information to the terminal device. Correspondingly, the terminal device receives the third indication information from the network device. The third indication information indicates the terminal device to perform the first measurement based on one or more SMTC measurement occasions in the second measurement period, and perform data transmission based on an SMTC measurement occasion in the second measurement period other than the one or more SMTC measurement occasions.

In this implementation, after receiving the third indication information, the terminal device may perform the data transmission based on the SMTC measurement occasion in the second measurement period other than the one or more SMTC measurement occasions, that is, perform step S504.

Optionally, the SMTC measurement occasion may alternatively be replaced with a measurement GAP measurement occasion. In view of this, S507 may be replaced with S507A. S507A: When the mobility parameter does not meet the preset condition, the network device sends seventh indication information to the terminal device. Correspondingly, the terminal device receives the seventh indication information from the network device. The seventh indication information indicates the terminal device to perform the first measurement based on one or more measurement GAP measurement occasions in the second measurement period, and perform data transmission based on a measurement GAP measurement occasion in the second measurement period other than the one or more measurement GAP measurement occasions. However, for related descriptions of S507A, refer to the related descriptions of S507 for understanding. Details are not described herein again.

S508: When the mobility parameter does not meet the preset condition, the network device sends fourth indication information to the terminal device. Correspondingly, the terminal device receives the fourth indication information from the network device. The fourth indication information indicates the terminal device to perform the first measurement based on one or more SMTC measurement occasions in the second measurement period, and perform a second measurement based on an SMTC measurement occasion in the second measurement period other than the one or more SMTC measurement occasions.

In this implementation, after receiving the fourth indication information, the terminal device may perform the second measurement based on the SMTC measurement occasion in the second measurement period other than the one or more SMTC measurement occasions, that is, perform step S505.

Optionally, the SMTC measurement occasion may alternatively be replaced with a measurement GAP measurement occasion. In view of this, S508 may be replaced with S508A. S508A: When the mobility parameter does not meet the preset condition, the network device sends eighth indication information to the terminal device. Correspondingly, the terminal device receives the eighth indication information from the network device. The eighth indication information indicates the terminal device to perform the first measurement based on one or more measurement GAP measurement occasions in the second measurement period, and perform a second measurement based on a measurement GAP measurement occasion in the second measurement period other than the one or more measurement GAP measurement occasions. However, for related descriptions of S508A, refer to the related descriptions of S508 for understanding. Details are not described herein again.

S509: When the mobility parameter does not meet the preset condition, the network device sends fifth indication information to the terminal device. Correspondingly, the terminal device receives the fifth indication information from the network device. The fifth indication information indicates the terminal device to perform the first measurement based on the second measurement period.

In this implementation, after receiving the fifth indication information, the terminal device may perform the first measurement based on the second measurement period, that is, perform step S503.

Optionally, S509 is an operation of interaction between the terminal and the network device in an SMTC measurement occasion scenario. However, the measurement method recorded in this embodiment of this application may be further applied to a measurement GAP measurement occasion scenario. In view of this, in the measurement GAP measurement occasion scenario, S509 may be replaced with S509A. S509A: When the mobility parameter does not meet the preset condition, the network device sends ninth indication information to the terminal device. Correspondingly, the terminal device receives the ninth indication information from the network device. The ninth indication information indicates the terminal device to perform the first measurement based on the second measurement period. However, for related descriptions of S508A, refer to the related descriptions of S508 for understanding. Details are not described herein again.

In some examples, the first measurement in this embodiment of this application is an L3 mobility measurement. The first measurement may include at least one of the following: a radio resource management (radio resource management, RRM) measurement or mobility management. In addition, the first measurement may be an intra-frequency measurement, or may be an inter-frequency measurement. This is not limited in this embodiment of this application.

In some examples, the second measurement in this embodiment of this application is an L1 beam management measurement. The second measurement may include at least one of the following: an L1-RSRP measurement, a beam management measurement, a radio link monitoring (radio link monitoring, RLM) L1 measurement, a candidate beam detection (candidate beam detection, CBD) L1 measurement, or a bidirectional forwarding detection (bidirectional forwarding detection, BFD) L1 measurement.

The foregoing is merely an example description of the first measurement and the second measurement. The first measurement and the second measurement may alternatively be other measurements. This is not limited in this application.

In a possible implementation, when the SMTC measurement occasion in the second measurement period other than the one or more SMTC measurement occasions is used for the second measurement, a measurement period compensation factor of the second measurement is determined based on a quantity of synchronization signal block SSB measurement occasions preempted by the first measurement in the second measurement period.

It may be understood that in this embodiment of this application, if the SMTC measurement occasion in the second measurement period other than the one or more SMTC measurement occasions is not used for the second measurement, the terminal device needs to compensate for the SSB measurement occasion preempted by the first measurement in the second measurement period. If the SMTC measurement occasion in the second measurement period other than the one or more SMTC measurement occasions is used for the second measurement, a part of SSB measurement occasions originally preempted by the first measurement may be released, so that the quantity of SSB measurement occasions preempted by the first measurement in the second measurement period is reduced, to reduce the measurement period compensation factor of the second measurement, shorten a measurement period of the second measurement, and further learn of a beam change in time through the second measurement. In addition, the method recorded above may be applied not only to the second measurement period, but also to another specified time period. This is not limited in this embodiment of this application.

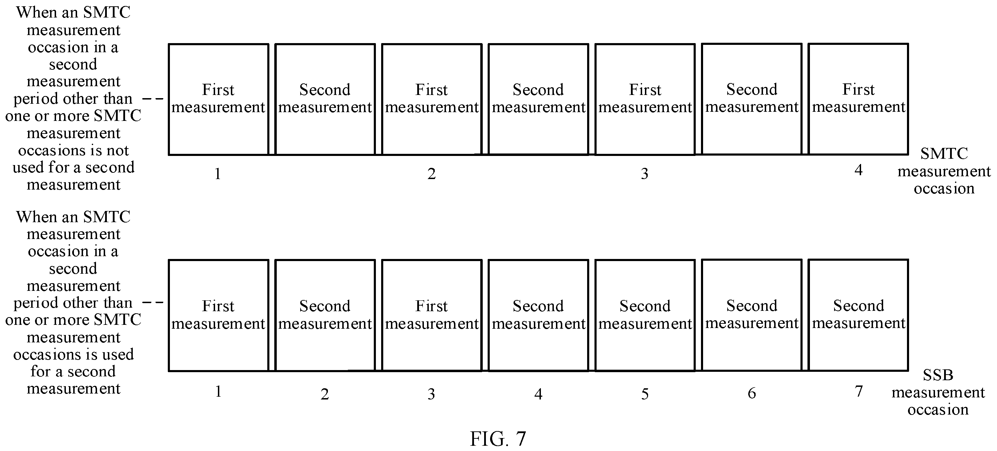

For example, FIG. 7 shows an example of resource occupation when the terminal device performs the second measurement, and an example of resource occupation of each measurement when the terminal device performs the first measurement and the second measurement. As shown in FIG. 7, if the terminal device performs only the second measurement, the terminal device may perform the second measurement based on a 1st to a 7th SSB measurement occasions. However, if the terminal device performs the first measurement and the second measurement, the terminal device preempts the 1st, the 3rd, the 5th, and the 7th SSB measurement occasions, so that the 1st, the 3rd, the 5th, and the 7th SSB measurement occasions are used for the first measurement. However, to ensure that the second measurement is normally performed, the terminal device compensates for the measurement period of the second measurement based on the four SSB measurement occasions preempted by the first measurement. If the terminal device performs the second measurement based on the SMTC measurement occasion (for example, a 3rd and a 4th SMTC measurement occasions shown in FIG. 7) in the second measurement period other than the one or more SMTC measurement occasions, the terminal device only needs to consider a resource preemption conflict between the first measurement and the second measurement in a 1st and a 2nd SMTC measurement occasions. Because both the 3rd and the 4th SMTC measurement occasions are used for the second measurement, a resource preemption conflict between the first measurement and the second measurement does not need to be considered. In this case, the terminal device may compensate for the measurement period (or the 1st and the 2nd SMTC measurement occasions) of the second measurement based on the two SSB measurement occasions (that is, the 1st and the 3rd SSB measurement occasions) preempted by the first measurement.

In a possible implementation, the terminal device may perform the second measurement within transition time between the one or more SMTC measurement occasions for performing the first measurement and the one or more SMTC measurement occasions for performing the second measurement.

In a possible implementation, the terminal device may directly determine the quantity of SSB measurement occasions preempted by the first measurement in the second measurement period as the measurement period compensation factor of the second measurement. In this case, the terminal device may determine the measurement period of the second measurement by performing addition processing on the measurement period compensation factor.

For example, in this implementation, the measurement period of the second measurement may satisfy the following Formula 3:

$$T_{L1\text{-}RSRP\_Measurement\_Period\_SSB} = \max(T_{Report}, \mathrm{ceil}(M_{meas\_period\_w/o\_gaps} + L_{SMTC}) \times T_{SSB}) \qquad \text{Formula 3}$$

$T_{L1\text{-}RSRP\_Measurement\_Period\_SSB}$ is the measurement period of the second measurement. $T_{Report}$ represents a reporting period of a second measurement configuration. $L_{SMTC}$ is the measurement period compensation factor of the second measurement. $T_{SSB}$ is the SSB measurement occasion.

In another possible implementation, the terminal device may further determine a ratio of the quantity of SSB measurement occasions preempted by the first measurement in the second measurement period to a quantity of all SSB measurement occasions in the second measurement period as the measurement period compensation factor of the second measurement. In this case, the terminal device may determine the measurement period of the second measurement by performing multiplication processing on the measurement period compensation factor.

For example, when the measurement period compensation factor of the second measurement is the ratio of the quantity of SSB measurement occasions preempted by the first measurement in the second measurement period to the quantity of all SSB measurement occasions in the second measurement period, the measurement period compensation factor of the second measurement may satisfy the following Formula 4:

$$Pssb\_smtc = \frac{NssbinSMTC}{Nssb} \qquad \text{Formula 4}$$

Pssb_smtc is the measurement period compensation factor of the second measurement. NssbinSMTC is the quantity of SSB measurement occasions preempted by the first measurement in the second measurement period. Nssb is the quantity of all SSB measurement occasions in the second measurement period.

It may be understood that, a related protocol specifies that the period compensation factor of the second measurement may satisfy the following Formula 5:

$$Pssb\_smtc = \frac{T_{SSB}}{T_{SMTCperiod}} \qquad \text{Formula 5}$$

$T_{SMTCperiod}$ (also referred to as $SMTC_{period}$) is the SMTC measurement occasion.

In other words, in the current related protocol, the terminal device determines the ratio of the SSB measurement occasion to the SMTC measurement occasion as the period compensation factor of the second measurement. Compared with the terminal device provided in this embodiment of this application determining the ratio of the quantity of SSB measurement occasions preempted by the first measurement in the second measurement period to the quantity of all SSB measurement occasions in the second measurement period as the measurement period compensation factor of the second measurement, in this embodiment of this application, the quantity of SSB measurement occasions of the second measurement preempted by the first measurement can be more accurately reflected, to improve accuracy of the period compensation factor of the second measurement.

An embodiment of this application provides a measurement method. A network device may determine whether a mobility parameter of a terminal device meets a preset condition, and send third indication information to the terminal device when the mobility parameter does not meet the preset condition, where the third indication information indicates the terminal device to perform a first measurement based on one or more SMTC measurement occasions in a second measurement period, and perform data transmission based on an SMTC measurement occasion in the second measurement period other than the one or more SMTC measurement occasions. Correspondingly, the terminal device receives the third indication information from the network device, performs the first measurement based on the one or more SMTC measurement occasions in the second measurement period, and performs the data transmission based on the SMTC measurement occasion in the second measurement period other than the one or more SMTC measurement occasions. The terminal device may split the second measurement period when the mobility parameter of the terminal device does not meet the preset condition, so that one part of SMTC measurement occasions in the second measurement period are used for the first measurement, and the other part of SMTC measurement occasions in the second measurement period are used for the data transmission. Therefore, a quantity of time domain resources used for the data transmission can be increased, to improve a throughput of the terminal device.

Alternatively, when the mobility parameter does not meet the preset condition, the network device sends fourth indication information to the terminal device, where the fourth indication information indicates the terminal device to perform the first measurement based on one or more SMTC measurement occasions in the second measurement period, and perform a second measurement based on an SMTC measurement occasion in the second measurement period other than the one or more SMTC measurement occasions. Correspondingly, the terminal device receives the fourth indication information from the network device, performs the first measurement based on the one or more SMTC measurement occasions in the second measurement period, and performs the second measurement based on the SMTC measurement occasion in the second measurement period other than the one or more SMTC measurement occasions. The terminal device may split the second measurement period when the mobility parameter of the terminal device does not meet the preset condition, so that one part of SMTC measurement occasions in the second measurement period are used for the first measurement, and the other part of SMTC measurement occasions in the second measurement period are used for the second measurement. Therefore, a quantity of time domain resources used for the second measurement can be increased, to improve a measurement capability of the second measurement.

Alternatively, when the mobility parameter does not meet the preset condition, the network device sends fifth indication information to the terminal device, where the fifth indication information indicates the terminal device to perform the first measurement based on the second measurement period. Correspondingly, the terminal device receives the fifth indication information from the network device, and performs the first measurement based on the second measurement period. The terminal device may perform the first measurement based on the entire second measurement period when the mobility parameter of the terminal device does not meet the preset condition. Therefore, a problem that the first measurement cannot be normally performed due to scheduling restriction can be avoided, thereby ensuring that the first measurement is normally performed.

In addition, in a measurement GAP scenario, the network device may determine whether the mobility parameter of the terminal device meets the preset condition, and when the mobility parameter does not meet the preset condition, send seventh indication information to the terminal device, where the seventh indication information indicates the terminal device to perform the first measurement based on one or more measurement GAP measurement occasions in the second measurement period, and perform data transmission based on a measurement GAP measurement occasion in the second measurement period other than the one or more measurement GAP measurement occasions. Correspondingly, the terminal device receives the seventh indication information from the network device, performs the first measurement based on the one or more measurement GAP measurement occasions in the second measurement period, and performs the data transmission based on the measurement GAP measurement occasion in the second measurement period other than the one or more measurement GAP measurement occasions. The terminal device may split the second measurement period when the mobility parameter of the terminal device does not meet the preset condition, so that one part of measurement GAP measurement occasions in the second measurement period are used for the first measurement, and the other part of measurement GAP measurement occasions in the second measurement period are used for the data transmission. Therefore, a quantity of time domain resources used for the data transmission can be increased, to improve a throughput of the terminal device.

Alternatively, when the mobility parameter does not meet the preset condition, the network device sends eighth indication information to the terminal device, where the eighth indication information indicates the terminal device to perform the first measurement based on one or more measurement GAP measurement occasions in the second measurement period, and perform a second measurement based on a measurement GAP measurement occasion in the second measurement period other than the one or more measurement GAP measurement occasions. Correspondingly, the terminal device receives the eighth indication information from the network device, performs the first measurement based on the one or more measurement GAP measurement occasions in the second measurement period, and performs the second measurement based on the measurement GAP measurement occasion in the second measurement period other than the one or more measurement GAP measurement occasions. The terminal device may split the second measurement period when the mobility parameter of the terminal device does not meet the preset condition, so that one part of measurement GAP measurement occasions in the second measurement period are used for the first measurement, and the other part of measurement GAP measurement occasions in the second measurement period are used for the second measurement. Therefore, a quantity of time domain resources used for the second measurement can be increased, to improve a measurement capability of the second measurement.

Alternatively, when the mobility parameter does not meet the preset condition, the network device sends ninth indication information to the terminal device, where the ninth indication information indicates the terminal device to perform the first measurement based on the second measurement period. Correspondingly, the terminal device receives the ninth indication information from the network device, and performs the first measurement based on the second measurement period. The terminal device may perform the first measurement based on the entire second measurement period when the mobility parameter of the terminal device does not meet the preset condition. Therefore, a problem that the first measurement cannot be normally performed due to scheduling restriction can be avoided, thereby ensuring that the first measurement is normally performed.

In a possible implementation, when the measurement GAP measurement occasion in the second measurement period other than one or more measurement GAP measurement occasions is used for the second measurement, a measurement period compensation factor of the second measurement is determined based on a quantity of SSB measurement occasions and a quantity of available measurement occasions in the second measurement period. The quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period. The valid measurement GAP measurement occasion is one or more measurement GAP measurement occasions for the first measurement in the second measurement period. In addition, the method recorded above may be applied not only to the second measurement period, but also to another specified time period. This is not limited in this embodiment of this application.

It may be understood that, generally, if the quantity of SSB measurement occasions that overlap neither the valid measurement GAP measurement occasion nor the any SMTC measurement occasion in the second measurement period is 0, the quantity of available measurement occasions is the quantity of SSB measurement occasions that do not overlap the valid measurement GAP measurement occasion in the second measurement period, to avoid that the quantity of available measurement occasions is 0. Certainly, the foregoing is merely an example of the quantity of available measurement occasions for description. The quantity of available measurement occasions may alternatively be a quantity of SSB measurement occasions that do not overlap any SMTC measurement occasion in the second measurement period. This is not limited in this embodiment of this application.

Further, optionally, the terminal device may determine a ratio of a quantity of SSB measurement occasions in the second measurement period to the quantity of available measurement occasions as the measurement period compensation factor of the second measurement, that is, the measurement period compensation factor of the second measurement may satisfy the following Formula 6:

$$Pssb\_GAP = \frac{N_{total}}{N_{available}} \qquad\qquad \text{Formula 6}$$

Pssb_GAP is the measurement period compensation factor of the second measurement. $N_{total}$ is the quantity of SSB measurement occasions in the second measurement period. $N_{available}$ is the quantity of available measurement occasions.

It may be understood that, in a current related protocol, it is specified that the quantity of available measurement occasions is a quantity of SSB measurement occasions that overlap neither any measurement GAP measurement occasion nor any SMTC measurement occasion in the second measurement period. However, the quantity of available measurement occasions recorded in this embodiment of this application is the quantity of SSB measurement occasions that overlap neither the valid measurement GAP measurement occasion nor the any SMTC measurement occasion in the second measurement period, or the quantity of available measurement occasions is the quantity of SSB measurement occasions that do not overlap the valid measurement GAP measurement occasion in the second measurement period. A quantity of valid measurement GAP measurement occasions in the second measurement period is less than a quantity of all measurement GAP measurement occasions in the second measurement period. Therefore, in the second measurement period, the quantity of SSB measurement occasions that do not overlap the quantity of valid measurement GAP measurement occasions is greater than a quantity of SSB measurement occasions that do not overlap a quantity of any measurement GAP measurement occasions. In other words, the quantity of available measurement occasions recorded in this embodiment of this application is greater than the quantity of available measurement occasions specified in the related protocol.

However, it can be learned from the foregoing related descriptions about the "measurement period compensation factor of the second measurement", the measurement period compensation factor of the second measurement is the ratio of the quantity of SSB measurement occasions in the second measurement period to the quantity of available measurement occasions. It can be learned from this that a larger quantity of available measurement occasions indicates a smaller measurement period compensation factor of the second measurement. In other words, the measurement method recorded in this embodiment of this application can reduce the measurement period compensation factor of the second measurement.

Further, the measurement period compensation factor of the second measurement may be used to determine a period of the second measurement. Generally, the terminal device determines the period of the second measurement by performing a multiplication operation on the measurement period compensation factor of the second measurement. It can be learned from this that a smaller measurement period compensation factor of the second measurement indicates a shorter period of the second measurement. In other words, the measurement method recorded in this embodiment of this application can shorten the period of the second measurement, to improve measurement performance of the second measurement and further improve beam sweeping performance.

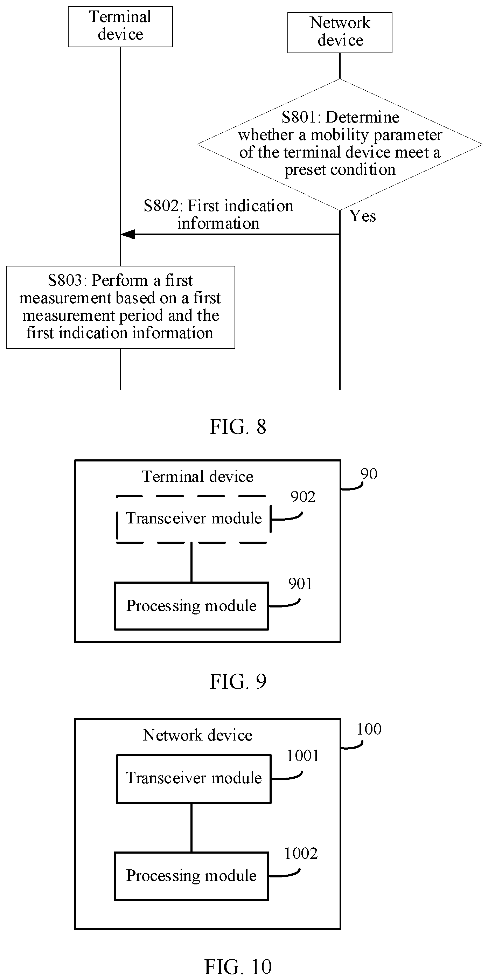

FIG. 8 shows another example of a measurement method according to an embodiment of this application. The method is described by using an example in which a terminal device interacts with a network device. Certainly, an action of the terminal device in the method may alternatively be performed by an apparatus/module in the terminal device, for example, a chip, a processor, or a processing unit in the terminal device; and an action of the network device in the method may alternatively be performed by an apparatus/module in the network device, for example, a chip, a processor, or a processing unit in the network device. This is not specifically limited in this embodiment of this application. For example, as shown in FIG. 8, the measurement method includes the following steps.

S801: The network device determines whether a mobility parameter of the terminal device meets a preset condition.

For related descriptions of determining, by the network device, whether the mobility parameter of the terminal device meets the preset condition, refer to the related descriptions of determining, by the terminal device, whether the mobility parameter of the terminal device meets the preset condition in step S501. Details are not described herein again.

Further, in this embodiment of this application, if the mobility parameter of the terminal device meets the preset condition, the measurement method provided in this embodiment of this application further includes the following step:

S802: The network device sends first indication information to the terminal device when the mobility parameter of the terminal device meets the preset condition. Correspondingly, the terminal device receives the first indication information from the network device.

The first indication information indicates the terminal device to perform a first measurement based on a first measurement period.

In a possible implementation, before the network device determines whether the mobility parameter of the terminal device meets the preset condition, the terminal device may send the mobility parameter of the terminal device to the network device, so that the network device performs S801 based on the mobility parameter of the terminal device.

S803: The terminal device performs the first measurement based on the first measurement period and the first indication information.

In this embodiment of this application, for related descriptions of performing the first measurement by the terminal device based on the first measurement period, refer to step S502. Details are not described herein again.

An embodiment of this application provides a measurement method. In the measurement method, a network device determines whether a mobility parameter of a terminal device meets a preset condition, and the network device sends first indication information to the terminal device when the mobility parameter of the terminal device meets the preset condition, where the first indication information indicates the terminal device to perform a first measurement based on a first measurement period. The first measurement period is shorter than a second measurement period, and the second measurement period is a measurement period for the terminal device to perform the first measurement when the mobility parameter does not meet the preset condition. Because the terminal device may perform the first measurement in time when the mobility parameter of the terminal device meets the preset condition, a problem that a measurement result reported by the terminal device is lagged can be avoided as much as possible. In other words, according to the measurement method provided in this embodiment of this application, the terminal device may adaptively select an appropriate measurement period for the first measurement based on the mobility parameter of the terminal device, to adaptively adjust the measurement period.

Further, if the mobility parameter of the terminal device does not meet the preset condition, the network device performs step S507, or step S508 and step S509. For details, refer to the descriptions in the foregoing embodiment. Details are not described herein again.

In some examples, information (for example, indication information, feedback information, a quantity of SMTCs for a measurement, or a quantity of measurement GAPs for a measurement), recorded in this embodiment of this application, transmitted between the network device and the terminal device may be transmitted by using MAC control element (control element, CE) signaling. The information, recorded in this embodiment of this application, transmitted between the network device and the terminal device may alternatively be transmitted by using RRC signaling. The information, recorded in this embodiment of this application, transmitted between the network device and the terminal device may alternatively be transmitted by using PDCCH signaling or PUCCH signaling. The information, recorded in this embodiment of this application, transmitted between the network device and the terminal device may alternatively be transmitted by using an interaction mechanism newly defined for a mobility measurement. Certainly, the foregoing is merely an example description of the information transmitted between the network device and the terminal device. The information may alternatively be transmitted between the network device and the terminal device in another manner. This is not limited in this application.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiment, an apparatus including the network device, or a component that can be used in the network device. Alternatively, the communication apparatus may be the terminal device in the foregoing method embodiment, an apparatus including the terminal device, or a component that can be used in the terminal device. It may be understood that, to implement the foregoing functions, the communication apparatus includes corresponding hardware structures and/or software modules for performing the functions. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

For example, the communication apparatus is the terminal device in the foregoing method embodiment. FIG. 9 is a diagram of a structure of a terminal device 90. The terminal device 90 includes a processing module 901. Optionally, the terminal device 90 further includes a transceiver module 902. The transceiver module 902 may also be referred to as a transceiver unit, is configured to implement receiving and sending functions, and for example, may be a transceiver circuit, a transceiver machine, a transceiver, or a communication interface.

In a possible implementation,

the processing module 901 is configured to perform a first measurement based on a first measurement period when a mobility parameter of the terminal device meets a preset condition, where the first measurement period is shorter than a second measurement period, and the second measurement period is a measurement period for the terminal device to perform the first measurement when the mobility parameter does not meet the preset condition.

In some embodiments, the preset condition includes that signal quality of the terminal device is less than or equal to a first preset threshold, and/or a change rate of the signal quality of the terminal device is greater than or equal to a second preset threshold, and/or a movement speed of the terminal device is greater than or equal to a third preset threshold.

In some embodiments, the transceiver module 902 is configured to receive first indication information from a network device, where the first indication information indicates the terminal device to perform the first measurement based on the first measurement period, and the first indication information is triggered when the mobility parameter meets the preset condition; and the processing module 901 is further configured to perform the first measurement based on the first measurement period and the first indication information.

In some embodiments, when the mobility parameter does not meet the preset condition, the processing module 901 is further configured to perform the first measurement based on the second measurement period; when the mobility parameter does not meet the preset condition, the processing module 901 is further configured to perform the first measurement based on one or more measurement time configuration SMTC measurement occasions in the second measurement period, and perform data transmission based on an SMTC measurement occasion in the second measurement period other than the one or more SMTC measurement occasions; or when the mobility parameter does not meet the preset condition, the processing module 901 is further configured to perform the first measurement based on one or more SMTC measurement occasions in the second measurement period, and perform a second measurement based on an SMTC measurement occasion in the second measurement period other than the one or more SMTC measurement occasions.

In some embodiments, the processing module 901 is further configured to determine, according to a first SMTC rule, the one or more SMTC measurement occasions for performing the first measurement in the second measurement period and one or more SMTC measurement occasions for performing the second measurement or the data transmission in the second measurement period, where the first SMTC rule indicates the one or more SMTC measurement occasions for performing the first measurement in the second measurement period.

In some embodiments, the transceiver module 902 is further configured to send a quantity of SMTCs for a measurement to the network device, where the quantity of SMTCs for the measurement is a quantity of SMTC measurement occasions that are expected to be occupied, in multiple SMTC measurement occasions included in the second measurement period, when the terminal device performs the first measurement; the transceiver module 902 is further configured to receive second indication information from the network device, where the second indication information indicates a first SMTC rule, and the first SMTC rule indicates the one or more SMTC measurement occasions for performing the first measurement in the second measurement period; and the processing module 901 is further configured to determine, according to the first SMTC rule, the one or more SMTC measurement occasions for performing the first measurement in the second measurement period and one or more SMTC measurement occasions for performing the second measurement or the data transmission in the second measurement period.

In some embodiments, the transceiver module 902 is further configured to receive third indication information from the network device, where the third indication information indicates the terminal device to perform the first measurement based on the one or more SMTC measurement occasions in the second measurement period, and perform the data transmission based on the SMTC measurement occasion in the second measurement period other than the one or more SMTC measurement occasions.

In some embodiments, the transceiver module 902 is further configured to receive fourth indication information from the network device, where the fourth indication information indicates the terminal device to perform the first measurement based on the one or more SMTC measurement occasions in the second measurement period, and perform the second measurement based on the SMTC measurement occasion in the second measurement period other than the one or more SMTC measurement occasions.

In some embodiments, the transceiver module 902 is further configured to receive fifth indication information from the network device, where the fifth indication information indicates the terminal device to perform the first measurement based on the second measurement period.

In some embodiments, when the SMTC measurement occasion in the second measurement period other than the one or more SMTC measurement occasions is used for the second measurement, a measurement period compensation factor of the second measurement is determined based on a quantity of synchronization signal block SSB measurement occasions preempted by the first measurement in the second measurement period.

In some embodiments, when the mobility parameter does not meet the preset condition, the processing module 1002 is further configured to perform the first measurement based on the second measurement period; when the mobility parameter does not meet the preset condition, the processing module 1002 is further configured to perform the first measurement based on one or more measurement gap GAP measurement occasions in the second measurement period, and perform data transmission based on a measurement GAP measurement occasion in the second measurement period other than the one or more measurement GAP measurement occasions; or when the mobility parameter does not meet the preset condition, the processing module 1002 is further configured to perform the first measurement based on one or more measurement GAP measurement occasions in the second measurement period, and perform a second measurement based on a measurement GAP measurement occasion in the second measurement period other than the one or more measurement GAP measurement occasions.

In some embodiments, the processing module 1002 is further configured to determine, according to a first measurement GAP rule, the one or more measurement GAP measurement occasions for performing the first measurement in the second measurement period and one or more measurement GAP measurement occasions for performing the second measurement or the data transmission in the second measurement period, where the first measurement GAP rule indicates the one or more measurement GAP measurement occasions for performing the first measurement in the second measurement period.

In some embodiments, the processing module 1002 is further configured to indicate the transceiver module 1001 to send a quantity of measurement GAPs for a measurement to the network device, where the quantity of measurement GAPs for the measurement is a quantity of measurement GAP measurement occasions that are expected to be occupied, in multiple measurement GAP measurement occasions included in the second measurement period, when the terminal device performs the first measurement; the processing module 1002 is further configured to indicate the transceiver module 1001 to receive sixth indication information from the network device, where the sixth indication information indicates a first measurement GAP rule, and the first measurement GAP rule indicates the one or more measurement GAP measurement occasions for performing the first measurement in the second measurement period; and the processing module 1002 is further configured to determine, according to the first measurement GAP rule, the one or more measurement GAP measurement occasions for performing the first measurement in the second measurement period and one or more measurement GAP measurement occasions for performing the second measurement or the data transmission in the second measurement period.

In some embodiments, the processing module 1002 is further configured to indicate the transceiver module 1001 to receive seventh indication information from the network device, where the seventh indication information indicates the terminal device to perform the first measurement based on the one or more measurement GAP measurement occasions in the second measurement period, and perform the data transmission based on the measurement GAP measurement occasion in the second measurement period other than the one or more measurement GAP measurement occasions.

In some embodiments, the processing module 1002 is further configured to indicate the transceiver module 1001 to receive eighth indication information from the network device, where the eighth indication information indicates the terminal device to perform the first measurement based on the one or more measurement GAP measurement occasions in the second measurement period, and perform the second measurement based on the measurement GAP measurement occasion in the second measurement period other than the one or more measurement GAP measurement occasions.

In some embodiments, the processing module 1002 is further configured to indicate the transceiver module 1001 to receive ninth indication information from the network device, where the ninth indication information indicates the terminal device to perform the first measurement based on the second measurement period.

In some embodiments, when the measurement GAP measurement occasion in the second measurement period other than the one or more measurement GAP measurement occasions is used for the second measurement, a measurement period compensation factor of the second measurement is determined based on a quantity of synchronization-signal block SSB measurement occasions and a quantity of available measurement occasions in the second measurement period, where the quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period, and the valid measurement GAP measurement occasion is one or more measurement GAP measurement occasions for the first measurement in the second measurement period.

In some embodiments, the first measurement is an L3 measurement, and the second measurement is an L1 measurement.

In some embodiments, when a target quantity of sweeping beams corresponding to the terminal device is less than a current quantity of sweeping beams of the terminal device, the first measurement period is determined based on the target quantity of sweeping beams corresponding to the terminal device; when a target quantity of parallel antenna panels corresponding to the terminal device is greater than a current quantity of parallel antenna panels of the terminal device, the first measurement period is determined based on the target quantity of parallel antenna panels corresponding to the terminal device; or when a target carrier measurement performance scaling factor CSSF corresponding to the terminal device is less than a current CSSF of the terminal device, the first measurement period is determined based on the target CSSF corresponding to the terminal device.

All related content of the steps in the foregoing method embodiments may be cited in function descriptions of the corresponding functional modules. Details are not described herein again.

In this embodiment of this application, the terminal device 90 is presented in a form of obtaining each functional module through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the terminal device 90 may be in a form of the communication apparatus 200 shown in FIG. 2.

For example, the processor 201 in the communication apparatus 200 shown in FIG. 2 may invoke computer-executable instructions stored in the memory 203, so that the communication apparatus 200 performs the measurement method in the foregoing method embodiments.

Specifically, the functions/implementation processes of the transceiver module 902 and the processing module 901 in FIG. 9 may be implemented by the processor 201 in the communication apparatus 200 shown in FIG. 2 by invoking the computer-executable instructions stored in the memory 203. Alternatively, the function/implementation process of the processing module 901 in FIG. 9 may be implemented by the processor 201 in the communication apparatus 200 shown in FIG. 2 by invoking the computer-executable instructions stored in the memory 203, and the function/implementation process of the transceiver module 902 in FIG. 9 may be implemented by the communication interface 204 in the communication apparatus 200 shown in FIG. 2.

Because the terminal device 90 provided in this embodiment of this application may perform the foregoing measurement method, for technical effects that can be obtained by the terminal device, refer to the foregoing method embodiments. Details are not described herein again.

Alternatively, for example, an example in which the communication apparatus is the network device in the foregoing method embodiments is used. FIG. 10 is a diagram of a structure of a network device 100. The network device 100 includes a transceiver module 1001 and a processing module 1002. The transceiver module 1001 may also be referred to as a transceiver unit, is configured to implement receiving and sending functions, and for example, may be a transceiver circuit, a transceiver machine, a transceiver, or a communication interface.

In a possible implementation,

when a mobility parameter of a terminal device meets a preset condition, the processing module 1002 is configured to indicate the transceiver module 1001 to send first indication information to the terminal device, where the first indication information indicates the terminal device to perform a first measurement based on a first measurement period, the first measurement period is shorter than a second measurement period, and the second measurement period is a measurement period for the terminal device to perform the first measurement when the mobility parameter does not meet the preset condition.

In some embodiments, the preset condition includes that signal quality of the terminal device is less than or equal to a first preset threshold, and/or a change rate of the signal quality of the terminal device is greater than or equal to a second preset threshold, and/or a movement speed of the terminal device is greater than or equal to a third preset threshold.

In some embodiments, when the mobility parameter does not meet the preset condition, the processing module 1002 is further configured to indicate the transceiver module 1001 to send fifth indication information to the terminal device, where the fifth indication information indicates the terminal device to perform the first measurement based on the second measurement period; when the mobility parameter does not meet the preset condition, the processing module 1002 is further configured to indicate the transceiver module 1001 to send third indication information to the terminal device, where the third indication information indicates the terminal device to perform the first measurement based on one or more measurement time configuration SMTC measurement occasions in the second measurement period, and perform data transmission based on an SMTC measurement occasion in the second measurement period other than the one or more SMTC measurement occasions; or when the mobility parameter does not meet the preset condition, the processing module 1002 is further configured to indicate the transceiver module 1001 to send fourth indication information to the terminal device, where the fourth indication information indicates the terminal device to perform the first measurement based on one or more SMTC measurement occasions in the second measurement period, and perform a second measurement based on an SMTC measurement occasion in the second measurement period other than the one or more SMTC measurement occasions.

In some embodiments, the processing module 1002 is further configured to indicate the transceiver module 1001 to receive a quantity of SMTCs for a measurement from the terminal device, where the quantity of SMTCs for the measurement is a quantity of SMTC measurement occasions that are expected to be occupied, in multiple SMTC measurement occasions included in the second measurement period, when the terminal device performs the first measurement; and the processing module 1002 is further configured to indicate the transceiver module 1001 to send second indication information to the terminal device, where the second indication information indicates a first SMTC rule, and the first SMTC rule indicates the one or more SMTC measurement occasions for performing the first measurement in the second measurement period.

In some embodiments, when the SMTC measurement occasion in the second measurement period other than the one or more SMTC measurement occasions is used for the second measurement, a measurement period compensation factor of the second measurement is determined based on a quantity of synchronization signal block SSB measurement occasions preempted by the first measurement in the second measurement period.

In some embodiments, the processing module 1002 is further configured to indicate the transceiver module 1001 to send ninth indication information to the terminal device when the mobility parameter does not meet the preset condition, where the ninth indication information indicates the terminal device to perform the first measurement based on the second measurement period; the processing module 1002 is further configured to indicate the transceiver module 1001 to send seventh indication information to the terminal device when the mobility parameter does not meet the preset condition, where the seventh indication information indicates the terminal device to perform the first measurement based on one or more measurement GAP measurement occasions in the second measurement period, and the processing module 1002 is further configured to perform data transmission based on a measurement GAP measurement occasion in the second measurement period other than the one or more measurement GAP measurement occasions; or the processing module 1002 is further configured to indicate the transceiver module 1001 to send eighth indication information to the terminal device when the mobility parameter does not meet the preset condition, where the eighth indication information indicates the terminal device to perform the first measurement based on one or more measurement GAP measurement occasions in the second measurement period, and the processing module 1002 is further configured to perform a second measurement based on a measurement GAP measurement occasion in the second measurement period other than the one or more measurement GAP measurement occasions.

In some embodiments, the processing module 1002 is further configured to indicate the transceiver module 1001 to receive a quantity of measurement GAPs for a measurement from the terminal device, where the quantity of measurement GAPs for the measurement is a quantity of measurement GAP measurement occasions that are expected to be occupied, in multiple measurement GAP measurement occasions included in the second measurement period, when the terminal device performs the first measurement; and the processing module 1002 is further configured to indicate the transceiver module 1001 to send sixth indication information to the terminal device, where the sixth indication information indicates a first measurement GAP rule, and the first measurement GAP rule indicates the one or more measurement GAP measurement occasions for performing the first measurement in the second measurement period.

In some embodiments, when the measurement GAP measurement occasion in the second measurement period other than the one or more measurement GAP measurement occasions is used for the second measurement, a measurement period compensation factor of the second measurement is determined based on a quantity of synchronization signal block SSB measurement occasions and a quantity of available measurement occasions in the second measurement period, where the quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period, and the valid measurement GAP measurement occasion is one or more measurement GAP measurement occasions for the first measurement in the second measurement period.

In some embodiments, the first measurement is an L3 measurement, and the second measurement is an L1 measurement.

In some embodiments, when a target quantity of sweeping beams corresponding to the terminal device is less than a current quantity of sweeping beams of the terminal device, the first measurement period is determined based on the target quantity of sweeping beams corresponding to the terminal device; when a target quantity of parallel antenna panels corresponding to the terminal device is greater than a current quantity of parallel antenna panels of the terminal device, the first measurement period is determined based on the target quantity of parallel antenna panels corresponding to the terminal device; or when a target carrier measurement performance scaling factor CSSF corresponding to the terminal device is less than a current CSSF of the terminal device, the first measurement period is determined based on the target CSSF corresponding to the terminal device.

All related content of the steps in the foregoing method embodiments may be cited in function descriptions of the corresponding functional modules. Details are not described herein again.

In this embodiment of this application, the network device 100 is presented in a form of obtaining each function module through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the network device 100 may be in a form of the communication apparatus 200 shown in FIG. 2.

For example, the processor 201 in the communication apparatus 200 shown in FIG. 2 may invoke computer-executable instructions stored in the memory 203, so that the communication apparatus 200 performs the measurement method in the foregoing method embodiments.

Specifically, the functions/implementation processes of the transceiver module 1001 and the processing module 1002 in FIG. 10 may be implemented by the processor 201 in the communication apparatus 200 shown in FIG. 2 by invoking the computer-executable instructions stored in the memory 203. Alternatively, the function/implementation process of the processing module 1002 in FIG. 10 may be implemented by the processor 201 in the communication apparatus 200 shown in FIG. 2 by invoking the computer-executable instructions stored in the memory 203, and the function/implementation process of the transceiver module 1001 in FIG. 10 may be implemented by the communication interface 204 in the communication apparatus 200 shown in FIG. 2.

Because the network device 100 provided in this embodiment may perform the foregoing measurement method, for technical effects that can be obtained by the network device, refer to the foregoing method embodiments. Details are not described herein again.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built into a SoC (system on a chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

In a possible implementation, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in this embodiment of this application.

In a possible implementation, an embodiment of this application further provides a computer-readable storage medium. The computer-readable storage medium stores a computer program or instructions. When the computer program or instructions are run on a communication apparatus, the communication apparatus is enabled to perform the method in any one of the foregoing method embodiments or the implementations of the foregoing method embodiments.

In a possible implementation, an embodiment of this application further provides a measurement method. The measurement method includes the method in any one of the foregoing method embodiments or the implementations of the foregoing method embodiments.

In a possible implementation, an embodiment of this application further provides a communication system. The communication system includes the terminal device in the foregoing method embodiments and the network device in the foregoing method embodiments.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a great effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies of this application.

**Claims**

1. A measurement method, applied to a terminal device and comprising:
   performing a first measurement based on a first measurement period when a mobility parameter of the terminal device meets a preset condition, wherein the first measurement period is shorter than a second measurement period, and the second measurement period is a measurement period for the terminal device to perform the first measurement when the mobility parameter does not meet the preset condition.

2. The method according to claim 1, wherein the preset condition comprises that signal quality of the terminal device is less than or equal to a first preset threshold, and/or a change rate of the signal quality of the terminal device is greater than or equal to a second preset threshold, and/or a movement speed of the terminal device is greater than or equal to a third preset threshold.

3. The method according to claim 1 or 2, wherein the performing the first measurement based on the first measurement period when the mobility parameter of the terminal device meets the preset condition comprises:

   receiving first indication information from a network device, wherein the first indication information indicates the terminal device to perform the first measurement based on the first measurement period, and the first indication information is triggered when the mobility parameter meets the preset condition; and
   performing the first measurement based on the first measurement period and the first indication information.

4. The method according to any one of claims 1 to 3, wherein the method further comprises:

when the mobility parameter does not meet the preset condition, performing the first measurement based on the second measurement period;

when the mobility parameter does not meet the preset condition, performing the first measurement based on one or more measurement time configuration SMTC measurement occasions in the second measurement period, and performing data transmission based on an SMTC measurement occasion in the second measurement period other than the one or more SMTC measurement occasions; or

when the mobility parameter does not meet the preset condition, performing the first measurement based on one or more SMTC measurement occasions in the second measurement period, and performing a second measurement based on an SMTC measurement occasion in the second measurement period other than the one or more SMTC measurement occasions.

5. The method according to claim 4, wherein the method further comprises:
determining, according to a first SMTC rule, the one or more SMTC measurement occasions for performing the first measurement in the second measurement period and one or more SMTC measurement occasions for performing the second measurement or the data transmission in the second measurement period, wherein the first SMTC rule indicates the one or more SMTC measurement occasions for performing the first measurement in the second measurement period.

6. The method according to claim 4, wherein the method further comprises:

sending a quantity of SMTCs for a measurement to the network device, wherein the quantity of SMTCs for the measurement is a quantity of SMTC measurement occasions that are expected to be occupied, in multiple SMTC measurement occasions comprised in the second measurement period, when the terminal device performs the first measurement;

receiving second indication information from the network device, wherein the second indication information indicates a first SMTC rule, and the first SMTC rule indicates the one or more SMTC measurement occasions for performing the first measurement in the second measurement period; and

determining, according to the first SMTC rule, the one or more SMTC measurement occasions for performing the first measurement in the second measurement period and one or more SMTC measurement occasions for performing the second measurement or the data transmission in the second measurement period.

7. The method according to any one of claims 4 to 6, wherein the method further comprises:
receiving third indication information from the network device, wherein the third indication information indicates the terminal device to perform the first measurement based on the one or more SMTC measurement occasions in the second measurement period, and perform the data transmission based on the SMTC measurement occasion in the second measurement period other than the one or more SMTC measurement occasions.

8. The method according to any one of claims 4 to 6, wherein the method further comprises:
receiving fourth indication information from the network device, wherein the fourth indication information indicates the terminal device to perform the first measurement based on the one or more SMTC measurement occasions in the second measurement period, and perform the second measurement based on the SMTC measurement occasion in the second measurement period other than the one or more SMTC measurement occasions.

9. The method according to any one of claims 4 to 6, wherein the method further comprises:
receiving fifth indication information from the network device, wherein the fifth indication information indicates the terminal device to perform the first measurement based on the second measurement period.

10. The method according to any one of claims 4 to 9, wherein when the SMTC measurement occasion in the second measurement period other than the one or more SMTC measurement occasions is used for the second measurement, a measurement period compensation factor of the second measurement is determined based on a quantity of synchronization signal block SSB measurement occasions preempted by the first measurement in the second measurement period.

11. The method according to any one of claims 1 to 3, wherein the method further comprises:

when the mobility parameter does not meet the preset condition, performing the first measurement based on the second measurement period;

when the mobility parameter does not meet the preset condition, performing the first measurement based on one or more measurement gap GAP measurement occasions in the second measurement period, and performing data transmission based on a measurement GAP measurement occasion in the second measurement period other than the one or more measurement GAP measurement occasions; or

when the mobility parameter does not meet the preset condition, performing the first measurement based on one or more measurement GAP measurement occasions in the second measurement period, and performing a second measurement based on a measurement GAP measurement occasion in the second measurement period other than the one or more measurement GAP measurement occasions.

12. The method according to claim 11, wherein the method further comprises:
determining, according to a first measurement GAP rule, the one or more measurement GAP measurement occasions for performing the first measurement in the second measurement period and one or more measurement GAP measurement occasions for performing the second measurement or the data transmission in the second measurement period, wherein the first measurement GAP rule indicates the one or more measurement GAP measurement occasions for performing the first measurement in the second measurement period.

13. The method according to claim 11, wherein the method further comprises:

sending a quantity of measurement GAPs for a measurement to the network device, wherein the quantity of measurement GAPs for the measurement is a quantity of measurement GAP measurement occasions that are expected to be occupied, in multiple measurement GAP measurement occasions comprised in the second measurement period, when the terminal device performs the first measurement;
receiving sixth indication information from the network device, wherein the sixth indication information indicates a first measurement GAP rule, and the first measurement GAP rule indicates the one or more measurement GAP measurement occasions for performing the first measurement in the second measurement period; and
determining, according to the first measurement GAP rule, the one or more measurement GAP measurement occasions for performing the first measurement in the second measurement period and one or more measurement GAP measurement occasions for performing the second measurement or the data transmission in the second measurement period.

14. The method according to any one of claims 11 to 13, wherein the method further comprises:
receiving seventh indication information from the network device, wherein the seventh indication information indicates the terminal device to perform the first measurement based on the one or more measurement GAP measurement occasions in the second measurement period, and perform the data transmission based on the measurement GAP measurement occasion in the second measurement period other than the one or more measurement GAP measurement occasions.

15. The method according to any one of claims 11 to 13, wherein the method further comprises:
receiving eighth indication information from the network device, wherein the eighth indication information indicates the terminal device to perform the first measurement based on the one or more measurement GAP measurement occasions in the second measurement period, and perform the second measurement based on the measurement GAP measurement occasion in the second measurement period other than the one or more measurement GAP measurement occasions.

16. The method according to any one of claims 11 to 13, wherein the method further comprises:
receiving ninth indication information from the network device, wherein the ninth indication information indicates the terminal device to perform the first measurement based on the second measurement period.

17. The method according to any one of claims 11 to 16, wherein when the measurement GAP measurement occasion in the second measurement period other than the one or more measurement GAP measurement occasions is used for the second measurement, a measurement period compensation factor of the second measurement is determined based on a quantity of synchronization signal block SSB measurement occasions and a quantity of available measurement occasions in the second measurement period, wherein the quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period, and the valid measurement GAP measurement occasion is one or more measurement GAP measurement occasions for the first measurement in the second measurement period.

18. The method according to any one of claims 4 to 17, wherein the first measurement is an L3 measurement, and the second measurement is an L1 measurement.

19. The method according to any one of claims 1 to 18, wherein when a target quantity of sweeping beams corresponding to the terminal device is less than a current quantity of sweeping beams of the terminal device, the first measurement period is determined based on the target quantity of sweeping beams corresponding to the terminal device;

when a target quantity of parallel antenna panels corresponding to the terminal device is greater than a current quantity of parallel antenna panels of the terminal device, the first measurement period is determined based on the target quantity of parallel antenna panels corresponding to the terminal device; or
when a target carrier measurement performance scaling factor CSSF corresponding to the terminal device is less than a current CSSF of the terminal device, the first measurement period is determined based on the target CSSF corresponding to the terminal device.

20. A measurement method, applied to a network device and comprising:
when a mobility parameter of a terminal device meets a preset condition, sending first indication information to the terminal device, wherein the first indication information indicates the terminal device to perform a first measurement based on a first measurement period, the first measurement period is shorter than a second measurement period, and the second measurement period is a measurement period for the terminal device to perform the first measurement when the mobility parameter does not meet the preset condition.

21. The method according to claim 20, wherein the preset condition comprises that signal quality of the terminal device is less than or equal to a first preset threshold, and/or a change rate of the signal quality of the terminal device is greater than or equal to a second preset threshold, and/or a movement speed of the terminal device is greater than or equal to a third preset threshold.

22. The method according to claim 20 or 21, wherein the method further comprises:

when the mobility parameter does not meet the preset condition, sending fifth indication information to the terminal device, wherein the fifth indication information indicates the terminal device to perform the first measurement based on the second measurement period;
when the mobility parameter does not meet the preset condition, sending third indication information to the terminal device, wherein the third indication information indicates the terminal device to perform the first measurement based on one or more measurement time configuration SMTC measurement occasions in the second measurement period, and perform data transmission based on an SMTC measurement occasion in the second measurement period other than the one or more SMTC measurement occasions; or
when the mobility parameter does not meet the preset condition, sending fourth indication information to the terminal device, wherein the fourth indication information indicates the terminal device to perform the first measurement based on one or more SMTC measurement occasions in the second measurement period, and perform a second measurement based on an SMTC measurement occasion in the second measurement period other than the one or more SMTC measurement occasions.

23. The method according to claim 22, wherein the method further comprises:

receiving a quantity of SMTCs for a measurement from the terminal device, wherein the quantity of SMTCs for the measurement is a quantity of SMTC measurement occasions that are expected to be occupied, in multiple SMTC measurement occasions comprised in the second measurement period, when the terminal device performs the first measurement; and
sending second indication information to the terminal device, wherein the second indication information indicates a first SMTC rule, and the first SMTC rule indicates the one or more SMTC measurement occasions for performing the first measurement in the second measurement period.

24. The method according to claim 22 or 23, wherein when the SMTC measurement occasion in the second measurement period other than the one or more SMTC measurement occasions is used for the second measurement, a measurement period compensation factor of the second measurement is determined based on a quantity of synchronization signal block SSB measurement occasions preempted by the first measurement in the second measurement period.

25. The method according to claim 20 or 21, wherein the method further comprises:

when the mobility parameter does not meet the preset condition, sending ninth indication information to the terminal device, wherein the ninth indication information indicates the terminal device to perform the first measurement based on the second measurement period;
when the mobility parameter does not meet the preset condition, sending seventh indication information to the terminal device, wherein the seventh indication information indicates the terminal device to perform the first measurement based on one or more measurement GAP measurement occasions in the second measurement period, and perform data transmission based on a measurement GAP measurement occasion in the second measurement period other than the one or more measurement GAP measurement occasions; or
when the mobility parameter does not meet the preset condition, sending eighth indication information to the terminal device, wherein the eighth indication information indicates the terminal device to perform the first measurement based on one or more measurement GAP measurement occasions in the second measurement period, and perform a second measurement based on a measurement GAP measurement occasion in the second measurement period other than the one or more measurement GAP measurement occasions.

26. The method according to claim 25, wherein the method further comprises:

receiving a quantity of measurement GAPs for a measurement from the terminal device, wherein the quantity of measurement GAPs for the measurement is a quantity of measurement GAP measurement occasions that are expected to be occupied, in multiple measurement GAP measurement occasions comprised in the second measurement period, when the terminal device performs the first measurement; and
sending sixth indication information to the terminal device, wherein the sixth indication information indicates a first measurement GAP rule, and the first measurement GAP rule indicates the one or more measurement GAP measurement occasions for performing the first measurement in the second measurement period.

27. The method according to claim 25 or 26, wherein when the measurement GAP measurement occasion in the second measurement period other than the one or more measurement GAP measurement occasions is used for the second measurement, a measurement period compensation factor of the second measurement is determined based on a quantity of synchronization signal block SSB measurement occasions and a quantity of available measurement occasions in the second measurement period, wherein the quantity of available measurement occasions is a quantity of SSB measurement occasions that overlap neither a valid measurement GAP measurement occasion nor any SMTC measurement occasion in the second measurement period, or the quantity of available measurement occasions is a quantity of SSB measurement occasions that do not overlap the valid measurement GAP measurement occasion in the second measurement period, and the valid measurement GAP measurement occasion is one or more measurement GAP measurement occasions for the first measurement in the second measurement period.

28. The method according to any one of claims 22 to 27, wherein the first measurement is an L3 measurement, and the second measurement is an L1 measurement.

29. The method according to any one of claims 20 to 28, wherein when a target quantity of sweeping beams corresponding to the terminal device is less than a current quantity of sweeping beams of the terminal device, the first measurement period is determined based on the target quantity of sweeping beams corresponding to the terminal device;

when a target quantity of parallel antenna panels corresponding to the terminal device is greater than a current quantity of parallel antenna panels of the terminal device, the first measurement period is determined based on the target quantity of parallel antenna panels corresponding to the terminal device; or
when a target carrier measurement performance scaling factor CSSF corresponding to the terminal device is less than a current CSSF of the terminal device, the first measurement period is determined based on the target CSSF corresponding to the terminal device.

30. A communication apparatus, comprising a functional unit configured to perform the method according to any one of claims 1 to 19, wherein an action performed by the functional unit is implemented by hardware or implemented by hardware executing corresponding software.

31. A communication apparatus, comprising a functional unit configured to perform the method according to any one of claims 20 to 29, wherein an action performed by the functional unit is implemented by hardware or implemented by hardware executing corresponding software.

32. A communication apparatus, wherein the communication apparatus comprises a processor, and the processor is configured to enable, by running a computer program or instructions or by using a logic circuit, the communication apparatus to perform the method according to any one of claims 1 to 19 or the communication apparatus to perform the method according to any one of claims 20 to 29.

33. The apparatus according to claim 32, wherein the communication apparatus further comprises a communication interface, configured to input or output a signal.

34. A computer-readable storage medium, wherein the computer-readable storage medium stores computer instructions or a program, and when the computer instructions or the program is run on a computer, the communication apparatus is enabled to perform the method according to any one of claims 1 to 19, or the communication apparatus is enabled to perform the method according to any one of claims 20 to 29.

35. A communication system, comprising the communication apparatus configured to perform the method according to any one of claims 1 to 19 and the communication apparatus configured to perform the method according to any one of claims 20 to 29.

FIG. 1

FIG. 2

Terminal device

Antenna 1                                      Antenna 2

| Mobile communication module<br>2G/3G/8G/5G<br>[350] | Wireless communication module<br>BT/WLAN/GNSS/NFC/IR/FM<br>[360] |

| Audio module<br>[370] | | Sensor module [380] |
| Displays 1 to N<br>[398] | Processor<br><br>[310] | Button [390] |
| Cameras 1 to N<br>[393] | | Internal memory<br>[321] |
| Indicator [392] | | SIM card<br>interfaces 1 to N<br>[395] |
| Motor [391] | | Interface [320] for<br>external memory |

| USB interface<br>[330] | Charging<br>management<br>module<br>[340] | Power<br>management<br>module [341] |
| Charging<br>input | | Battery [342] |

FIG. 3

FIG. 4

FIG. 5

Terminal
device

Network
device

S501: Determine
whether a mobility parameter
of the terminal device meet a
preset condition

S506: Determine
whether the mobility
parameter of the terminal
device meet the preset
condition

Yes

No

No

No

No | No | No

S502: Perform a
first measurement
based on a first
measurement period

S509: Fifth indication
information

S507: Third indication
information

S503: Perform a
first measurement
based on a second
measurement period

S508: Fourth
indication
information

S504: Perform a first
measurement based on one
or more SMTC
measurement occasions in a
second measurement
period, and perform data
transmission based on an
SMTC measurement
occasion in the second
measurement period other
than the one or more
SMTC measurement
occasions

S505: Perform a first
measurement based on one or
more SMTC measurement
occasions in a second
measurement period, and
perform a second measurement
based on an SMTC
measurement occasion in the
second measurement period
other than the one or more
SMTC measurement occasions

FIG. 6

EP 4 750 129 A1

FIG. 7

| Terminal device | | Network device |

S801: Determine whether a mobility parameter of the terminal device meet a preset condition

S802: First indication information

Yes

S803: Perform a first measurement based on a first measurement period and the first indication information

**FIG. 8**

Terminal device — 90

Transceiver module — 902

Processing module — 901

**FIG. 9**

Network device — 100

Transceiver module — 1001

Processing module — 1002

**FIG. 10**

## INTERNATIONAL SEARCH REPORT

| International application No. |
|---|
| **PCT/CN2024/111268** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 测量, 周期, 间隔, 频率, 参数, 速度, 速率, 信号质量, 信道质量, 信噪比, 信干噪比, 信号强度, 变化率, measur+, period, interval, frequency, parameter, speed, signal quality, channel quality, SNR, SINR, RSSI, RSRQ, RSRP, rate of change

**C. DOCUMENTS CONSIDERED TO BE RELEVANT**

| Category* | Citation of document, with indication, where appropriate, of the relevant passages | Relevant to claim No. |
|---|---|---|
| X | CN 108886414 A (TELEFONAKTIEBOLAGET LM ERICSSON (PUBL)) 23 November 2018 (2018-11-23) description, paragraphs 0002-0146 | 1-35 |
| X | CN 101129083 A (NOKIA CORP.) 20 February 2008 (2008-02-20) description, page 3 paragraph 5-page 11 paragraph 5 | 1-35 |
| X | US 2022022069 A1 (QUALCOMM INC.) 20 January 2022 (2022-01-20) description, paragraphs 0038-0130 | 1-35 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 October 2024** | **06 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="3" align="center">INTERNATIONAL SEARCH REPORT<br>Information on patent family members</td><td colspan="2">International application No.<br><br>**PCT/CN2024/111268**</td></tr>
<tr><td>Patent document<br>cited in search report</td><td>Publication date<br>(day/month/year)</td><td colspan="2" align="center">Patent family member(s)</td><td>Publication date<br>(day/month/year)</td></tr>
<tr><td>CN 108886414 A</td><td>23 November 2018</td><td>KR</td><td>20180121560 A</td><td>07 November 2018</td></tr>
<tr><td></td><td></td><td>WO</td><td>2017162287 A1</td><td>28 September 2017</td></tr>
<tr><td></td><td></td><td>JP</td><td>2019513324 A</td><td>23 May 2019</td></tr>
<tr><td></td><td></td><td>US</td><td>2018083722 A1</td><td>22 March 2018</td></tr>
<tr><td></td><td></td><td>EP</td><td>3433954 A1</td><td>30 January 2019</td></tr>
<tr><td>CN 101129083 A</td><td>20 February 2008</td><td>WO</td><td>2006097803 A1</td><td>21 September 2006</td></tr>
<tr><td></td><td></td><td>EP</td><td>1859640 A1</td><td>28 November 2007</td></tr>
<tr><td></td><td></td><td>US</td><td>2006205406 A1</td><td>14 September 2006</td></tr>
<tr><td>US 2022022069 A1</td><td>20 January 2022</td><td>WO</td><td>2022015952 A2</td><td>20 January 2022</td></tr>
<tr><td></td><td></td><td>EP</td><td>4183161 A2</td><td>24 May 2023</td></tr>
<tr><td></td><td></td><td>CN</td><td>115804138 A</td><td>14 March 2023</td></tr>
</table>

Form PCT/ISA/210 (patent family annex) (July 2022)

**EP 4 750 129 A1**

**Patent documents cited in the description**

- CN 202311019150